# EUROPEAN PATENT APPLICATION

(11) **EP 4 678 611 A1**
(43) Date of publication of application: **14.01.2026**
(21) Application number: 24770856.3
(22) Date of filing: 11.03.2024
(51) Int. Cl.: C03C 27/12, B32B 7/023

(54) **INTERLAYER FILM FOR LAMINATED GLASS, AND LAMINATED GLASS**

(30) Priority: 10.03.2023 JP 2023038014
(71) Applicant: Sekisui Chemical Co., Ltd., Osaka-shi, Osaka 530-8565 (JP)
(72) Inventor: SUZUKI, Yuuki, Koka-shi, Shiga 528-8585 (JP); TAKAI, Minako, Koka-shi, Shiga 528-8585 (JP); OOTA, Yuusuke, Koka-shi, Shiga 528-8585 (JP)
(74) Representative: Ter Meer Steinmeister & Partner
(86) International application number: PCT/JP2024/009383
(87) International publication number: WO 2024/190750

(57) **Abstract**

An interlayer film for laminated glass having a first resin layer, wherein a difference between a maximum value and a minimum value of a* of transmitted light obtained at incident angles of 5°, 20°, 40°, and 60° in an L*a*b* color system for the first resin layer is 3.0 or more and 15.0 or less.

## Description

### Technical Field

The present invention relates to an interlayer film for laminated glass, and laminated glass having an interlayer film for laminated glass.

### Background Art

Laminated glass is widely used for window glass for various conveyances such as automobiles and window glass for buildings and the like because even if laminated glass is subjected to an external impact and broken, pieces of the broken glass rarely scatter and are safe. As the laminated glass, laminated glass in which an interlayer film for laminated glass including a resin component such as a polyvinyl acetal resin is interposed between a pair of glasses and integrated is widely known.

It is known that for laminated glass, metal particles are blended for the purpose of enhancing heat shielding performance. For example, Patent Literature 1 discloses an interlayer film for laminated glass including a metal flat-plate particle-containing layer, in which silver flat-plate nanoparticles and the like are used as metal flat-plate particles. For example, Patent Literature 2 discloses an interlayer film for laminated glass, including flat plate-shaped metal particles formed from metal such as silver, and shows that the flat plate-shaped metal particles may be coated with metal oxide.

Interlayer films for laminated glass have been recently often demanded to have aesthetic quality, and interlayer films for laminated glass are sometimes colored by inclusion of colorants. It is also known that for interlayer films for laminated glass, metallic particles are blended for coloration, and, for example, Patent Literature 3 discloses blending of a metallic pigment for coloration, into an interlayer film for laminated glass including polyvinyl butyral and a plasticizer. It is also indicated that, regarding the interlayer film for laminated glass in Patent Literature 3, a resin composition containing a metallic pigment may further contain a color material such as a pigment or a dye.

### Citation List

### Patent Literatures

PTL1: WO 2019/003783
PTL2: JP 2014-191224 A
PTL3: WO 2016/028963

### Summary of Invention

### Technical Problem

However, a conventional interlayer film for laminated glass, into which a pigment or a dye is blended, has not been sufficiently changed in hue, and has not been said to be sufficient in aesthetic quality.

Accordingly, it is an object of the present invention to provide an interlayer film for laminated glass, which is excellent in aesthetic quality.

### Solution to Problem

As a result of diligent studies, the present inventors have found that an interlayer film for laminated glass, which is changed in hues of transmitted light and reflected light depending on a viewing angle and which has excellent aesthetic quality, can be provided by allowing optical properties of a first resin layer contained in the interlayer film to be those defined, and completed the present invention below. Specifically, the present invention provides the following [1] to [23].
[1] An interlayer film for laminated glass having a first resin layer, wherein
   a difference between a maximum value and a minimum value of a* of transmitted light obtained at incident angles of 5°, 20°, 40°, and 60° in an L*a*b* color system for the first resin layer is 3.0 or more and 15.0 or less.
[2] An interlayer film for laminated glass having a first resin layer, wherein
   a difference between a maximum value and a minimum value of b* of transmitted light obtained at incident angles of 5°, 20°, 40°, and 60° in an L*a*b* color system for the first resin layer is 1.0 or more and 9.0 or less.
[3] The interlayer film for laminated glass according to the above [1] or [2], wherein a difference between a maximum value and a minimum value of b* of transmitted light obtained at incident angles of 5°, 20°, 40°, and 60° in the L*a*b* color system for the first resin layer is 2.0 or more and 7.0 or less.
[4] The interlayer film for laminated glass according to any of the above [1] to [3], wherein a coordinate area TS1 of a*b* of transmitted light obtained at incident angles of 5°, 20°, 40°, and 60° in the L*a*b* color system for the first resin layer satisfies 1 ≤ TS1 ≤ 40.
[5] An interlayer film for laminated glass having a first resin layer, wherein
   a difference between a maximum value and a minimum value of a* of reflected light obtained at incident angles of 5°, 20°, 40°, and 60° in an L*a*b* color system for the first resin layer is 4.5 or more and 15.0 or less.
[6] An interlayer film for laminated glass having a first resin layer, wherein
   a difference between a maximum value and a minimum value of b* of reflected light obtained at incident angles of 5°, 20°, 40°, and 60° in an L*a*b* color system for the first resin layer is 4.0 or more and 8.0 or less.
[7] The interlayer film for laminated glass according to any of the above [1], [5], and [6], wherein a difference between a maximum value and a minimum value of b* of transmitted light obtained at incident angles of 5°, 20°, 40°, and 60° in the L*a*b* color system for the first resin layer is 1.0 or more and 9.0 or less.
[8] The interlayer film for laminated glass according to any of the above [1], [2], and [6], wherein a difference between a maximum value and a minimum value of a* of reflected light obtained at incident angles of 5°, 20°, 40°, and 60° in the L*a*b* color system for the first resin layer is 4.5 or more and 15.0 or less.
[9] The interlayer film for laminated glass according to any of the above [1], [2], and [5], wherein a difference between a maximum value and a minimum value of b* of reflected light obtained at incident angles of 5°, 20°, 40°, and 60° in the L*a*b* color system for the first resin layer is 4.0 or more and 8.0 or less.
[10] The interlayer film for laminated glass according to any of the above [1] to [9], wherein a difference between a maximum value and a minimum value of b* of reflected light obtained at incident angles of 5°, 20°, 40°, and 60° in the L*a*b* color system in the first resin layer is 5.0 or more and 7.0 or less.
[11] The interlayer film for laminated glass according to any of the above [1] to [10], wherein a coordinate area RS1 of a*b* of reflected light obtained at incident angles of 5°, 20°, 40°, and 60° in the L*a*b* color system for the first resin layer satisfies 1 ≤ RS1 ≤ 40.
[12] The interlayer film for laminated glass according to any of the above [1] to [11], wherein, in the L*a*b* color system for the first resin layer,
   the reflected light at an incident angle of 5° satisfies at least any of -8 ≤ a* ≤ 5 or -6 ≤ b* ≤ 5, and
   the reflected light at an incident angle of 60° satisfies at least any of -5 ≤ a* ≤ 5 or -5 ≤ b* ≤ 5.
[13] The interlayer film for laminated glass according to any of the above [1] to [12], further having a second resin layer.
[14] The interlayer film for laminated glass according to any of the above [1] to [13], wherein, in an L*a*b* color system for the interlayer film for laminated glass, transmitted light obtained at an incident angle of 5° satisfies at least any of -10 ≤ a* ≤ 5 or 3 ≤ b* ≤ 15 and transmitted light obtained at an incident angle of 60° satisfies at least any of -10 ≤ a* ≤ 10 or 0 ≤ b* ≤ 10.
[15] The interlayer film for laminated glass according to any of the above [1] to [13], wherein, in an L*a*b* color system for the interlayer film for laminated glass, reflected light obtained at an incident angle of 5° satisfies at least any of -10 ≤ a* ≤ 10 or -10 ≤ b* ≤ 3, and reflected light obtained at an incident angle of 60° satisfies at least any of -5 ≤ a* ≤ 5 or -5 ≤ b* ≤ 5.
[16] The interlayer film for laminated glass according to any of the above [1] to [15], wherein the first resin layer includes a filler (A) having at least any of a non-metal material or a metal oxide.
[17] The interlayer film for laminated glass according to the above [16], wherein the filler (A) includes two or more kinds of metal oxides.
[18] The interlayer film for laminated glass according to the above [17], wherein the two or more kinds of metal oxides have refractive indexes different from each other.
[19] The interlayer film for laminated glass according to any of the above [16] to [18], wherein the filler (A) has a metal oxide and glass.
[20] The interlayer film for laminated glass according to any of the above [16] to [19], wherein the filler (A) has a flat plate shape.
[21] The interlayer film for laminated glass according to any of the above [16] to [20], wherein the filler (A) has a multilayer structure.
[22] The interlayer film for laminated glass according to any of the above [16] to [21], wherein an aspect ratio of the filler (A) is 1 or more and 50 or less.
[23] Laminated glass including a first laminated glass member, a second laminated glass member, and the interlayer film for laminated glass according to any of the above [1] to [22], wherein
   the interlayer film for laminated glass is disposed between the first laminated glass member and the second laminated glass member.

### Advantageous Effects of Invention

According to the present invention, it is possible to provide an interlayer film for laminated glass, which is changed in hues of transmitted light and reflected light depending on a viewing angle and which has excellent aesthetic quality.

### Brief Description of Drawings

[Fig. 1] Fig. 1 is a graph for describing a method for calculating a coordinate area.
[Fig. 2] Fig. 2 is a schematic cross-sectional view showing a filler (A) having a laminated structure and having a flat plate shape.
[Fig. 3] Fig. 3 is a schematic cross-sectional view showing one example of an interlayer film for laminated glass.

### Description of Embodiments

The present invention will be described in more detail below.

### <First Resin Layer>

The interlayer film for laminated glass (hereinafter, sometimes simply referred to as an "interlayer film") according to the present invention has at least a first resin layer, and the first resin layer satisfies at least any requirement of the following requirements (1) to (4).
(1) The difference between the maximum value and the minimum value of a* of transmitted light obtained at incident angles of 5°, 20°, 40°, and 60° in the L*a*b* color system for the first resin layer is 3.0 or more and 15.0 or less.
(2) The difference between the maximum value and the minimum value of b* of transmitted light obtained at incident angles of 5°, 20°, 40°, and 60° in the L*a*b* color system for the first resin layer is 1.0 or more and 9.0 or less,
   interlayer film for laminated glass.
(3) The difference between the maximum value and the minimum value of a* of reflected light obtained at incident angles of 5°, 20°, 40°, and 60° in the L*a*b* color system for the first resin layer is 4.5 or more and 15.0 or less.
(4) The difference between the maximum value and the minimum value of b* of reflected light obtained at incident angles of 5°, 20°, 40°, and 60° in the L*a*b* color system for the first resin layer is 4.0 or more and 8.0 or less.

In the present invention, when the difference between the maximum value and the minimum value of a* of the transmitted light is 3.0 or more or the difference between the maximum value and the minimum value of b* of the transmitted light is 1.0 or more as shown in the requirements (1) and (2), the color change of the transmitted light is increased depending on a viewing angle, and therefore excellent aesthetic quality can be achieved. The interlayer film is commonly used in applications of conveyances such as automobiles or in building applications, in this case, window glass is generally viewed from inside the car or the interior side by the transmitted light, and therefore the interlayer film satisfies the requirement (1) or (2) to easily have higher aesthetic quality on inside the car or the interior side.

By setting the difference between the maximum value and the minimum value of a* of the transmitted light at 15.0 or less or the difference between the maximum value and the minimum value of b* of the transmitted light at 9.0 or less, the hue of the transmitted light can be prevented from being extremely changed depending on a viewing angle, and therefore an interlayer film for laminated glass having high aesthetic quality can be provided. By setting the difference at 15.0 or less, or 9.0 or less, it is not necessary for providing the color change to contain a large amount of a filler (A) described later and therefore the interlayer film easily ensures transparency or the like.

In the present invention, when the difference between the maximum value and the minimum value of a* of the reflected light is 4.5 or more or the difference between the maximum value and the minimum value of b* of the reflected light is 4.0 or more as shown in the requirements (3) and (4), the color change of the reflected light is increased depending on a viewing angle, and therefore excellent aesthetic quality can be achieved.

The interlayer film is commonly used in applications of conveyances such as automobiles or in building applications, in this case, window glass is generally viewed from outside the car or the exterior side by the reflected light, and therefore the interlayer film satisfies the requirement (3) or (4) to easily have higher aesthetic quality on outside the car or the exterior side.

By setting the difference between the maximum value and the minimum value of a* of the reflected light at 15.0 or less or the difference between the maximum value and the minimum value of b* of the reflected light at 8.0 or less, the hue of the reflected light can be prevented from being extremely changed depending on a viewing angle, and therefore excellent aesthetic quality can be ensured. By setting the difference between the maximum value and the minimum value of a* of the reflected light at 15.0 or less or the difference between the maximum value and the minimum value of b* of the reflected light at 8.0 or less, it is not necessary for providing the color change of the reflected light to contain a large amount of a filler (A) described later and therefore the interlayer film easily ensures transparency or the like.

In the present invention, any one of the requirements (1) to (4) should be satisfied, and at least any two thereof are preferably satisfied, at least any three thereof are more preferably satisfied, and all the requirements are particularly preferably satisfied from the viewpoint of aesthetic quality.

In particular, when both the requirement (1) and the requirement (2) are satisfied, the color change of the transmitted light is larger depending on a viewing angle and an interlayer film higher in aesthetic quality is easily obtained. Similarly, when both the requirement (3) and the requirement (4) are satisfied, the color change of the reflected light is larger depending on a viewing angle and an interlayer film higher in aesthetic quality is easily obtained.

Each value (a*, b*) in the requirements (1) to (4) can be appropriately adjusted depending on the type, content and the like of a filler described later.

The difference between the maximum value and the minimum value of a* of the transmitted light in the requirement (1) is preferably 3.0 or more and 15.0 or less, more preferably 3.5 or more and 12.0 or less, and further preferably 4.0 or more and 8.0 or less from the viewpoint that aesthetic quality with respect to the transmitted light is increased to allow design properties in the car interior or the room interior to be excellent. Similarly, the difference between the maximum value and the minimum value of b* of the transmitted light in the requirement (2) is preferably 1.0 or more and 9.0 or less, more preferably 2.0 or more and 7.0 or less, and further preferably 2.0 or more and 5.5 or less from the viewpoint of an increase in aesthetic quality with respect to the transmitted light.

The difference between the maximum value and the minimum value of a* of the reflected light in the requirement (3) is preferably 4.5 or more and 15.0 or less, more preferably 4.8 or more and 12.0 or less, and further preferably 5.0 or more and 8.0 or less from the viewpoint that aesthetic quality with respect to the reflected light is increased to allow design properties of appearances of conveyances or buildings to be excellent. Similarly, the difference between the maximum value and the minimum value of b* of the reflected light in the requirement (4) is preferably 4.0 or more and 8.0 or less, more preferably 5.0 or more and 7.5 or less, and further preferably 5.0 or more and 7.0 or less from the viewpoint of an increase in aesthetic quality with respect to the reflected light.

The coordinate area TS1 of a*b* of transmitted light obtained at incident angles of 5°, 20°, 40°, and 60° in the L*a*b* color system for the first resin layer preferably satisfies 1 ≤ TS1 ≤ 40. By setting the coordinate area TS1 at 1 or more, the color change of the transmitted light is larger depending on a viewing angle and aesthetic quality in the car interior or in buildings is more easily increased. By setting the TS1 at 40 or less, it is possible to prevent the color change of the transmitted light from being larger than necessary and/or prevent the amount of a filler (A) described later from being larger than necessary. The TS1 is more preferably 2.0 or more and 25 or less, and further preferably 4.0 or more and 10 or less from these viewpoints.

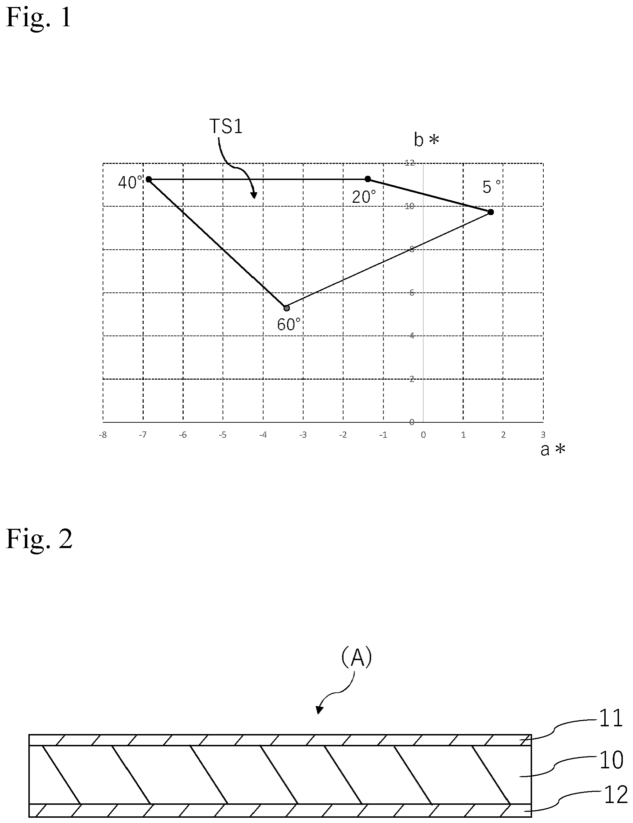

The coordinate area TS1 is the area of a region surrounded by four points in plotting of values of a* and b* at each incident angle under the assumption that the x-axis corresponds to a* and the y-axis corresponds to b*, as shown in Fig. 1.

The coordinate area RS1 of a*b* of reflected light obtained at incident angles of 5°, 20°, 40°, and 60° in the L*a*b* color system for the first resin layer preferably satisfies 1 ≤ RS1 ≤ 40. By setting the coordinate area RS1 at 1 or more, the color change of the reflected light is larger depending on a viewing angle and aesthetic quality in appearances of conveyances or appearances of buildings is easily increased. By setting the coordinate area RS1 at 40 or less, it is possible to prevent the color change of the reflected light from being larger than necessary and/or prevent the amount of a filler (A) described later from being larger than necessary. The RS1 is, more preferably 5.0 or more and 30 or less, and further preferably 10.0 or more and 20.0 or less from these viewpoints.

The coordinate area RS2 is the area of a region surrounded by four points in plotting of values of a* and b* at each incident angle under the assumption that the x-axis corresponds to a* and the y-axis corresponds to b*, as in the coordinate area TS1.

In the L*a*b* color system for the first resin layer, preferably, the reflected light at an incident angle of 5° satisfies at least any of -8 ≤ a* ≤ 5 or -6 ≤ b* ≤ 5 and the reflected light at an incident angle of 60° satisfies at least any of -5 ≤ a* ≤ 5 or -5 ≤ b* ≤ 5. When a* and b* of reflected light at an incident angle of 5° and an incident angle of 60° are within the ranges, the first resin layer is suppressed in coloration with the reflected light and the color change of the reflected light depending on a viewing angle is performed in a color region in which the chromatic value is small. Therefore, the color change can be made with a muted color tone, and a sense of high quality, and the like are easily provided.

More preferably, the reflected light at an incident angle of 5° satisfies both -8 ≤ a* ≤ 5 and -6 ≤ b* ≤ 5 and the reflected light at an incident angle of 60° satisfies both -5 ≤ a* ≤ 5 and -5 ≤ b* ≤ 5, and more preferably, the reflected light at an incident angle of 5° satisfies both -4 ≤ a* ≤ 3 and -3 ≤ b* ≤ 3 and the reflected light at an incident angle of 60° satisfies both -3 ≤ a* ≤ 3 and -3 ≤ b* ≤ 3.

In the L*a*b* color system for the first resin layer, preferably, the transmitted light at an incident angle of 5° satisfies at least any of -10 ≤ a* ≤ 10 or -10 ≤ b* ≤ 10, and the transmitted light at an incident angle of 60° satisfies at least any of -10 ≤ a* ≤ 10 or -10 ≤ b* ≤ 10. When a* and b* of transmitted light at an incident angle of 5° and an incident angle of 60° are within the ranges, the first resin layer is suppressed in coloration with the transmitted light, the color change of the transmitted light depending on a viewing angle is performed in a color region having a relatively muted chromatic value, and therefore a sense of high quality, and the like are easily provided.

Preferably, the transmitted light at an incident angle of 5° satisfies both -10 ≤ a* ≤ 10 and -10 ≤ b* ≤ 10 and the transmitted light at an incident angle of 60° satisfies both -10 ≤ a* ≤ 10 and -10 ≤ b* ≤ 10. More preferably, the transmitted light at an incident angle of 5° satisfies both -8 ≤ a* ≤ 1 and 2 ≤ b* ≤ 6 and the transmitted light at an incident angle of 60° satisfies both -5 ≤ a* ≤ 5 and -5 ≤ b* ≤ 5.

Herein, a* and b* of transmitted light obtained at incident angles of 5°, 20°, 40°, and 60° for the first resin layer in the present invention are each a value determined by bonding two standard clear glass plates via the first resin layer to produce laminated glass, and subjecting the laminated glass to measurement. Herein, a* and b* of transmitted light obtained at incident angles of 5°, 20°, 40°, and 60° can be each determined by allowing light to be incident to one surface of the laminated glass at each of these incident angles and detecting transmitted light on the other surface of laminated glass 10.

In addition, a* and b* of reflected light obtained at incident angles of 5°, 20°, 40°, and 60° can be each determined by allowing light to be incident to one surface of the laminated glass at each of these incident angles and detecting reflected light on the other surface side.

When a plurality of such first resin layers is present in the interlayer film with these layers being apart from each other, the a* value and the b* value with respect to each of such first resin layers apart from each other should be measured and the values of any of such first resin layers should be adopted.

### (Filler (A))

The first resin layer should have a filler (A) having any of metal, metal oxide, and a non-metal material. The filler (A) in the first resin layer should be dispersed in a resin constituting the first resin layer. The filler (A) preferably has at least any of metal oxide or a non-metal material, and more preferably has metal oxide. The filler (A) is preferably a filler having visible light reflection performance. When the filler (A) is formed by a specified material and has visible light reflection performance, the a* and b* values of transmitted light and reflected light are easily changed depending on the change in incident angle to the interlayer film.

Examples of the metal in the filler (A) include aluminum, silver, copper, platinum, gold, titanium, nickel, tin, a tin-cobalt alloy, indium, and chromium. Examples of the metal oxide include metal oxides such as titanium oxide, silicon oxide, indium oxide, niobium oxide, zinc oxide, antimony oxide, and tungsten oxide. Examples of the non-metal material include any inorganic compound other than the metal and the metal oxide, and specific examples include glass and mica.

The filler (A) including metal oxide is preferably a filler containing two or more kinds of compounds in each particle, and is preferably a filler including two or more kinds of metal oxides in each particle or a filler containing metal oxide and a non-metal material such as mica or glass in each particle. The non-metal material is here preferably glass.

The filler containing two or more kinds of compounds preferably has a multilayer structure, and specific examples include a filler having a multilayer structure of two or more kinds of metal oxides, a filler having a multilayer structure of metal oxide and mica, and a filler having a multilayer structure of metal oxide and glass. When the filler (A) has the above multilayer structure, the first resin layer generates a so-called color travel, and can also change the a* and b* values of transmitted light and reflected light according to the change in incident angle to the interlayer film and therefore can allow the aesthetic quality of the interlayer film to be excellent.

The filler (A), when has a multilayer structure of two or more kinds of metal oxides, easily provides a metallic feeling with respect to transmitted light and/or reflected light. While coloring is easily imparted to reflected light, transmitted light which penetrates through the interlayer film can be hardly tinted and can also have an achromatic color.

The filler (A), when has a multilayer structure of metal oxide and glass, can decrease the haze and allows the interlayer film for laminated glass to easily ensure transparency. Furthermore, reflection or the like from the filler (A) can be visually recognized as a grain pattern having a gloss feeling, and the interlayer film for laminated glass can be allowed to have special aesthetic quality.

The filler (A), when has a multilayer structure of metal oxide and mica, can increase the degree of whiteness of the interlayer film and can also allow the interlayer film to have a gloss feeling and the like.

In the multilayer structure of metal oxides, two or more kinds of metal oxides should have different refractive indexes from each other. Thanks to the metal oxides having different refractive indexes from each other, layers having different refractive indexes are formed, and thereby reflection between the layers is generated and a proper metallic feeling is easily ensured. The layers formed from such metal oxides having different refractive indexes from each other should be adjacent in the filler having a multilayer structure of metal oxides.

The refractive index difference between metal oxides having different refractive indexes from each other is preferably 0.1 or more and 1.2 or less from the viewpoint of making transparency and a metallic feeling good. The refractive index difference is more preferably 0.3 or more and 1.1 or less, and further preferably 0.6 or more and 1.05 or less.

The thickness ratio between layers formed by metal oxides different from each other is preferably 1:2 to 1:15 in the filler (A) having a multilayer structure of two or more kinds of metal oxides. By having such a thickness ratio, the filler (A) easily achieves a metallic feeling. The thickness ratio is more preferably 1:3 to 1:13 and further preferably 1:4 to 1: 11. The filler (A) can also be controlled in thickness ratio to result in the change in color of reflected light.

The thickness ratio is an average value of values measured by observation of any 50 particles with a scanning electron microscope (SEM) or the like.

Each of the two or more kinds of metal oxides should be selected from the group consisting of titanium oxide, silicon oxide, indium oxide, niobium oxide, zinc oxide, antimony oxide, and tungsten oxide, and, in particular, is preferably titanium oxide and silicon oxide. The titanium oxide is titanium dioxide (TiO₂), and may be of rutile type, anatase type, or brookite type. The silicon oxide is silicon dioxide (SiO₂).

The filler (A) more preferably contains both titanium oxide and silicon oxide, and further preferably has a multilayer structure of a titanium oxide layer and a silicon oxide layer.

The filler (A) preferably has a multilayer structure and is in the form of metal oxide particles formed from the two or more kinds of metal oxides as described above, and is preferably in the form of particles in which metal oxide particles (medium layer described later) including at least one metal oxide are coated with at least one different metal oxide.

The filler (A) having a multilayer structure of metal oxide and glass should be formed from glass and metal oxide selected from the group consisting of titanium oxide, silicon oxide, indium oxide, niobium oxide, zinc oxide, antimony oxide, and tungsten oxide. The metal oxide is, in particular, preferably titanium oxide, silicon oxide, or both thereof.

The filler (A) having a multilayer structure of metal oxide and glass further preferably has a multilayer structure of a glass layer and a metal oxide layer, and in particular, a medium layer constituting the glass layer is preferably in the form of particles coated with metal oxide (preferably titanium oxide, silicon oxide, or both thereof).

The filler (A) having a multilayer structure of metal oxide and mica should be formed from mica and metal oxide selected from the group consisting of titanium oxide, silicon oxide, indium oxide, niobium oxide, zinc oxide, antimony oxide, and tungsten oxide, and the metal oxide is, in particular, preferably titanium oxide. The filler (A) having a multilayer structure of metal oxide and mica further preferably has a multilayer structure of a mica layer and a metal oxide layer, and in particular, a medium layer constituting the mica layer is preferably in the form of particles coated with metal oxide (preferably titanium oxide).

The shape of the filler (A) may be any shape of a spherical shape, a multangular shape such as a quadrangular prism shape, a polygonal pyramid shape such as a triangular pyramid shape or a quadrangular pyramid shape, a columnar shape, a circular cone shape, an indefinite shape, a needle shape, a fibrous form, a flat plate shape, and the like, and is preferably a flat plate shape. When the filler (A) has a flat plate shape, a color travel can be generated and the values of a* and b* of transmitted light and reflected light can also be changed according to the change in incident angle of light to the interlayer film.

When the filler (A) has a flat plate shape, incident visible light is oriented along with a surface direction of the interlayer film as described later and thus not only a certain amount of the incident visible light is reflected, but also the transparency of the interlayer film is easily increased. In addition, the regular reflection is unlikely to cause light scattering and easily decreases the haze of laminated glass.

When a flat plate-shaped filler (A) has the above multilayer structure, a plurality of layers is preferably provided along with a thickness direction, and preferably 2 to 5 layers, more preferably 2 to 4 layers, further preferably 3 layers are provided along with the thickness direction.

Fig. 2 shows a specific example of a flat plate-shaped filler (A) of a three-layer structure. When the filler (A) has a three-layer structure, the filler should include a medium layer 10 and coating layers 11 and 12 provided on both surfaces of the medium layer 10, as shown in Fig. 1. The filler shown in Fig. 1 should have a multilayer structure of metal oxide, and the metal oxide forming each of the coating layers 11 and 12 may be different from the metal oxide forming the medium layer 10. The metal oxides forming the coating layers 11 and 12 are preferably the same from each other.

The refractive index of the metal oxide forming each of the coating layers 11 and 12 is preferably higher than the refractive index of the medium layer 10. By setting relatively high refractive indexes of the coating layers 11 and 12, light is transmitted with being properly reflected and both the transparency and metallic feeling of the interlayer film are easily made good. In addition, a three-layer structure and higher refractive indexes of the metal oxides of the coating layers 11 and 12 than the refractive index of the medium layer 10 allow incident light from any of both surfaces to be properly reflected, and thus not only transparency can be more effectively ensured, a metallic feeling can be exhibited. Here, the preferred values of the difference between the refractive index of each of the coating layers 11 and 12 and the refractive index of the medium layer 10 are as described above.

The respective thicknesses of the coating layers 11 and 12 are preferably smaller than the thickness of the medium layer 10. Preferred values of a specific thickness ratio (each coating layer : medium layer) are as shown with respect to the thickness ratio between such layers.

In the flat plate-shaped filler (A) having a multilayer structure of metal oxide, particularly preferably, the coating layers 11 and 12 are each a titanium oxide layer and the medium layer 10 is a silicon oxide layer. The flat plate-shaped filler (A) is not limited to the above having a three-layer structure, and may have a two-layer structure, and in that case, one of the coating layers 11 and 12 may be omitted. A multilayer structure of four or more layers may also be adopted.

The filler of a multilayer structure of glass and metal oxide should be constituted from a glass layer constituting the medium layer and metal oxide layers which are provided on both surfaces of the glass layer and which constitute the coating layers. The metal oxide in the metal oxide layers should be at least one selected from metal oxides described above, and is preferably titanium oxide and/or silicon oxide. One of such titanium oxide and silicon oxide may be used singly, or two (titanium oxide and silicon oxide) may be used in combination. The metal oxide layer in each of the coating layers may be in the form of one layer or two layers. That is, the filler of a multilayer structure of glass and metal oxide may have a three-layer structure of the metal oxide layer, the medium layer and the metal oxide layer, or may have a five-layer structure of the metal oxide layer, the metal oxide layer, the medium layer, the metal oxide layer, and the metal oxide, in which the metal oxide layer has a two-layer structure. In the five-layer structure, preferably, the metal oxide constituting the outer metal oxide layer is titanium oxide and the metal oxide constituting the inner metal oxide layer is silicon oxide. In the filler of a multilayer structure in which the medium layer is constituted from a glass layer, the metal oxide layers provided on both surfaces of the glass layer are not limited to that of a two-layer structure, may have three or more layers, and accordingly the filler of a multilayer structure of a medium layer constituted from a glass layer is not particularly limited as long as it has a structure in which single-layer or multilayer metal oxide layers are provided on both surfaces of the glass layer.

The filler having a metal oxide layer may be a filler having a mica layer and a metal oxide layer. Specifically, the medium layer should be constituted from a mica layer and the coating layer should be constituted from a metal oxide layer, and the coating layer is preferably a titanium oxide layer.

The filler (A) is preferably a filler having a medium layer and a coating layer formed by metal oxide as described above, and in this case the whole of the medium layer surface may be coated with the coating layer or one portion of the medium layer surface may be coated with the coating layer. By coating one portion of the medium layer surface, reflection by the filler (A) is made ununiform. Therefore, reflected light and transmitted light in laminated glass can be, for example, in a patchy manner, to provide special aesthetic quality.

When one portion of the medium layer surface is coated, the coating percentage of the medium layer with the coating layer is, for example, 30% or more and 99% or less, preferably 40% or more and 90% or less, and further preferably 50% or more and 80% or less. When one portion of the medium layer surface is coated, a portion of the medium layer, not coated with the coating layer, may be continuously provided or may be formed, for example, in a spotty manner and thus discontinuously provided.

The average particle diameter (D50) of the filler (A) is preferably 1 µm or more and 100 µm or less. By setting the average particle diameter within the range, a color travel is generated, and the values of a* and b* of transmitted light and reflected light are also easily changed according to the change in incident angle or the like of light to the interlayer film. The average particle diameter of the filler (A) is more preferably 3 µm or more and 90 µm or less, and further preferably 5 µm or more and 80 µm or less from the viewpoint of generation of a color travel. The average particle diameter (D50) is a value measured with a laser diffraction/scattering type particle size distribution measurement apparatus, and the value (D50) at a cumulative volume of 50% is defined as the average particle diameter.

The average particle diameter of the filler (A) having a multilayer structure of metal oxide is preferably 1 µm or more and 20 µm or less, preferably 3 µm or more and 18 µm or less, and more preferably 5 µm or more and 16 µm or less from the viewpoint that not only both transparency and a metallic feeling are achieved, but also light scattering in the interlayer film is easily suppressed.

In this regard, the average particle diameter of the filler (A) having a multilayer structure of metal oxide and glass is preferably equal to or more than a fixed value from the viewpoint of enabling a grain pattern having a gloss feeling, and/or the like to be visually recognized by reflected light and/or the like from the filler, and allowing the interlayer film for laminated glass to have special aesthetic quality, and specifically, is preferably 5 µm or more and 100 µm or less, more preferably 10 µm or more and 90 µm or less, and further preferably 15 µm or more and 80 µm or less.

The thickness of the filler (A) is preferably 0.01 µm or more and 4 µm or less, more preferably 0.1 µm or more and 3.5 µm or less, and further preferably 0.2 µm or more and 3 µm or less from the viewpoint of allowing transparency to be easily ensured and allowing a color travel to be easily generated. The filler (A), when has a multilayer structure of metal oxide having a thickness within the range, easily exhibits a metallic feeling. The thickness of the filler (A) is an average value of values measured by observation of any 50 particles with a scanning electron microscope (SEM) or the like. The thickness of the filler (A) should be a length in a direction in which the maximum value among lengths in a direction perpendicular to the longitudinal direction of the filler is the shortest, and the thickness of the flat plate-shaped filler (A) corresponds to a vertical length in Fig. 2.

The aspect ratio of the filler (A) is preferably 1 or more, more preferably 1.1 or more, and further preferably 1.2 or more, and preferably 50 or less, more preferably 30 or less, further preferably 15 or less, and still further preferably 10 or less. When the aspect ratio is the above, a color travel is easily generated. In addition, a certain amount of incident visible light is reflected and also the transparency of the interlayer film is easily increased by orienting the filler (A) along with the surface direction of the interlayer film as described later. In addition, by setting the aspect ratio at 50 or less, the average particle diameter (D50) of the filler (A) can be prevented from being larger than necessary. The aspect ratio of the filler (A) is here the ratio of the length of a longer axis to the length of a shorter axis of the filler (A) recognized with a scanning electron microscope. The longer axis and the shorter axis are respectively a longer axis and a shorter axis of the filler (A) in a plan view along with the thickness direction, and in the case of a flat plate-shaped filler, respectively correspond to a longitudinal direction and a direction perpendicular to the longitudinal direction, in the surface direction of the filler.

When the filler (A) has an orientable anisotropy as in the case of having a flat plate shape, the longitudinal direction thereof is preferably oriented so as to be along with the surface direction of the interlayer film. When the filler (A) has a flat plate shape, the surface direction thereof is preferably oriented so as to be along with the surface direction of the interlayer film. That is, the flat plate-shaped filler (A) is preferably oriented so that the thickness direction of the filler (A) is along with the thickness direction of the interlayer film. The filler (A), when has the above orientation, enables light travelling in the interlayer film along with the thickness direction to be not only appropriately reflected, but also partially transmitted, and also enables light scattering occurring in the filler (A) to be suppressed. Therefore, the haze is lowered to facilitate an enhancement in transparency.
in the first resin layer, the filler (A) may be used singly, or two or more kinds thereof may be used in combination.

The method for producing the filler (A) is not particularly limited, and, for example, the filler (A) having a multilayer structure should be produced by coating particles formed from metal oxide, with another metal oxide, or coating particles formed from mica or glass, with metal oxide. Alternatively, the flat plate-shaped filler (A) may also be obtained by, for example, coating a sheet formed from metal oxide, with another metal oxide, and then pulverizing the sheet. The filler (A) here used may also be a commercial product.

The content of the filler (A) in the first resin layer is preferably 0.01% by mass or more and 0.5% by mass or less. When the content is 0.01% by mass or more, a color travel is easily generated. By setting the content at 0.5% by mass or less, light is prevented from being more reflected than necessary in the first resin layer, to result in a lower haze and easily allow see-through properties of the laminated glass to be ensured. From these viewpoints, the content of the filler (A) is more preferably 0.02% by mass or more, further preferably 0.04% by mass or more and still further preferably 0.08% by mass or more, and more preferably 0.4% by mass or less, further preferably 0.3% by mass or less and still further preferably 0.2% by mass or less.

The first resin layer may contain a colorant and thus be formed into a colored layer. When the first resin layer contains a colorant, the aesthetic quality of the interlayer film is easily more increased. The detail of the colorant is as described later with respect to a second resin layer.

The first resin layer more preferably contains substantially no colorant. When no colorant is substantially contained, transmitted light of the first resin layer is easily affected by the hue of the filler (A). The reflection from the filler (A) is also hardly blocked, and a color travel is easily generated. The "containing substantially no colorant" means that no colorant is intentionally blended in the first resin layer, and a specific content of the colorant in the first resin layer is, for example, less than 0.0001% by mass, preferably less than 0.00001% by mass, and most preferably less than 0% by mass.

In this regard, when the first resin layer contains a colorant, the content is preferably 0.0001% by mass or more and 0.1% by mass or less, more preferably 0.001% by mass or more, further preferably 0.005% by mass or more, and still further preferably 0.01% by mass or more, and more preferably 0.08% by mass or less, further preferably 0.05% by mass or less, and still further preferably 0.035% by mass or less.

### <Second resin layer>

The interlayer film of the present invention preferably contains a second resin layer in addition to the first resin layer.

The second resin layer is a layer not satisfying all the requirements (1) to (4). Accordingly, the second resin layer should have no filler (A) or a small amount of the filler (A) even when has the filler.

The second resin layer preferably contains a colorant. By allowing the second resin layer to contain a colorant, the interlayer film is colored to a desired color and higher aesthetic quality is easily imparted. By allowing the second resin layer to contain a colorant, light reflected by the filler (A) is absorbed in the second resin layer and the light can be prevented from being emitted from the second resin layer side of the interlayer film. Therefore, for example, a metallic feeling is strong in view from the first resin layer side, whereas a metallic feeling can also be suppressed in view from the second resin layer side, and aesthetic quality is easily enhanced. The colorant in the second resin layer should be dispersed in a resin constituting the second resin layer.

### [Colorant]

A pigment or a dye to be blended in a conventional interlayer film for laminated glass can be used as the colorant. The colorant is suitably a pigment from the viewpoint of being capable of effectively coloring the interlayer film in a small amount of blending.

Examples of the pigment include phthalocyanine, anthraquinone, perylene, azo compounds, carbon black, quinacridone, titanium oxide, diketopyrrolopyrrole, thioindigo, Ni complexes, perinone, isoindoline, quinophthalone, threne, dioxazine, pyrrocoline, calcium carbonate, and derivatives thereof. Among these, phthalocyanine, a phthalocyanine derivative, anthraquinone, an anthraquinone derivative, perylene, a perylene derivative, and carbon black are preferred because of having high affinity with the thermoplastic resin and being hardly bled out, in particular, at least one selected from the group consisting of carbon black and a phthalocyanine derivative is more preferred, and in particular, carbon black is particularly preferred. By using at least one selected from the group consisting of carbon black and a phthalocyanine derivative, particularly, carbon black, the one can provide a muted color tone, easily provides a sense of high quality, and the like, and can much more increase aesthetic quality. When a phthalocyanine derivative is used as the pigment, a copper phthalocyanine-based pigment is preferably used.

One colorant may be used singly, or two or more kinds of colorants may be used in combination, in the second resin layer.

The content of the colorant in the second resin layer is preferably 0.0001% by mass or more and 0.1% by mass or less. When the content is 0.0001% by mass or more, light reflected by the filler (A) is sufficiently absorbed by the colorant, moderate metallic feeling and colorability can be exhibited and aesthetic quality can be increased. When the content is 0.1% by mass or less, light is prevented from being more absorbed than necessary by the colorant, and transparency and like of laminated glass are also easily ensured. From these viewpoints, the content of the colorant is more preferably 0.001% by mass or more, further preferably 0.005% by mass or more and still further preferably 0.01% by mass or more, and more preferably 0.08% by mass or less, further preferably 0.05% by mass or less and still further preferably 0.035% by mass or less.

The second resin layer may be a clear layer containing substantially no colorant. When the second resin layer is a clear layer, coloring by the filler (A) directly easily provides the color of transmitted light. The "containing substantially no colorant" means that no colorant is intentionally blended in the second resin layer, and the content of the colorant in the second resin layer is, for example, less than 0.0001% by mass, preferably less than 0.00001% by mass, and most preferably less than 0% by mass.

### [Thermoplastic Resin]

The resin constituting the first resin layer is preferably a thermoplastic resin. The resin constituting the second resin layer is preferably a thermoplastic resin. By containing the thermoplastic resin the first resin layer or the second resin layer easily serves as the function as an adhesive layer, and the adhesiveness to the laminated glass members, and any other layer constituting the interlayer film is good.

The thermoplastic resin in each of the resin layers is not particularly limited, and examples thereof include a polyvinyl acetal resin, an ethylene-vinyl acetate copolymer resin, an ionomer resin, a polyurethane resin, a thermoplastic elastomer, an acrylic resin, an acrylic-vinyl acetate copolymer resin, a polyvinyl alcohol resin, a polyolefin resin, a polyvinyl acetate resin, and a polystyrene resin. By using these resins, adhesiveness to a laminated glass member is easily ensured.

In particular, a polyvinyl acetal resin, an ethylene-vinyl acetate copolymer resin, an ionomer resin, a polyurethane resin, and a thermoplastic elastomer are preferred.
in the interlayer film of the present invention, one thermoplastic resin may be used singly, or two or more kinds of thermoplastic resins may be used in combination. When two or more kinds of thermoplastic resins are used in combination, the two or more kinds of thermoplastic resins may be contained in one resin layer (first or second resin layer), or different types of thermoplastic resins from each other may be contained in different resin layers (first and second resin layers) respectively, in the interlayer film.

Of these, at least one selected from the group consisting of a polyvinyl acetal resin and an ethylene-vinyl acetate copolymer resin is preferred, and a polyvinyl acetal resin is more preferred in terms of exhibiting excellent adhesiveness to inorganic glass, particularly when it is used in combination with a plasticizer.

Accordingly, the resin in the first resin layer, or the resin in the first and second resin layers is more preferably at least one selected from a polyvinyl acetal resin and an ethylene-vinyl acetate copolymer resin, and more preferably a polyvinyl acetal resin.

The resins constituting the resin layers should be appropriately selected from the resins listed above. The resins constituting the resin layers may be different resins from each other but are preferably the same as each other.

Therefore, the resins constituting the first and second resin layers are each preferably a polyvinyl acetal resin or an ethylene-vinyl acetate copolymer resin, more preferably a polyvinyl acetal resin.

### (Polyvinyl Acetal Resin)

The polyvinyl acetal resin is not particularly limited as long as it is a polyvinyl acetal resin obtained by acetalizing polyvinyl alcohol (PVA) with an aldehyde.

The aldehyde is not particularly limited, but generally, an aldehyde having 1 to 10 carbon atoms is preferably used. The aldehyde having 1 to 10 carbon atoms is not particularly limited, and examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. These aldehydes may be used singly, or two or more kinds of these aldehydes may be used in combination.

Among the above, n-butyraldehyde, n-hexylaldehyde, and n-valeraldehyde are preferred, and n-butyraldehyde is more preferred. Therefore, for the polyvinyl acetal resin, a polyvinyl butyral resin is preferred.

Polyvinyl alcohol (PVA) is obtained, for example, by saponifying a polyvinyl ester such as polyvinyl acetate. The degree of saponification of polyvinyl alcohol is generally 70 to 99.9 mol %. One polyvinyl acetal resin may be used singly, or two or more kinds of polyvinyl acetal resins may be used in combination.

The average degree of polymerization of PVA is preferably 200 or more, more preferably 500 or more, further preferably 1000 or more, and still further preferably 1500 or more. When the average degree of polymerization is equal to or more than the lower limits, the penetration resistance of laminated glass increases. The average degree of polymerization of PVA is preferably 5000 or less, more preferably 4000 or less, further preferably 3500 or less, and still further preferably 2500 or less.

The average degree of polymerization of polyvinyl alcohol is obtained by a method in accordance with JIS K6726 "Testing methods for polyvinyl alcohol".

The amount of hydroxyl groups in the polyvinyl acetal resin is preferably 15 mol % or more and preferably 38 mol % or less. By setting the amount of hydroxyl groups at 15 mol % or more, the adhesiveness easily becomes good, and the penetration resistance of laminated glass, and the like are easily made good. By setting the amount of hydroxyl groups at 38 mol % or less, laminated glass is prevented from being too hard. The amount of hydroxyl groups is more preferably 20 mol % or more, further preferably 25 mol % or more, from the viewpoint of adhesiveness to laminated glass members, and the like. The amount of hydroxyl groups is more preferably 35% or less, further preferably 33 mol % or less.

Also when a polyvinyl butyral resin is used as the polyvinyl acetal resin, the amount of hydroxyl groups is 15 mol % or more and preferably 38 mol % or less, and more preferably 20 mol % or more, further preferably 25 mol % or more, and more preferably 35% mol or less, further preferably 33 mol % or less, from the same viewpoints.

The amount of hydroxyl groups in the polyvinyl acetal resin is the value, expressed in percentage, of the mole fraction obtained by dividing the amount of ethylene groups to which hydroxyl groups are bonded, by the amount of all ethylene groups in the main chain. The amount of ethylene groups to which hydroxyl groups are bonded can be measured, for example, in accordance with JIS K6728 "Testing methods for polyvinyl butyral".

The degree of acetalization of the polyvinyl acetal resin is preferably 47 mol % or more and preferably 85 mol % or less. The degree of acetalization is more preferably 55 mol % or more, further preferably 60 mol % or more, and more preferably 80 mol % or less, further preferably 75 mol % or less.

The degree of acetalization means the degree of butyralization when the acetal group is a butyral group, and the polyvinyl acetal resin (A) is a polyvinyl butyral resin.

The degree of acetalization is the value, expressed in percentage, of the mole fraction obtained by subtracting the amount of ethylene groups to which hydroxyl groups are bonded and the amount of ethylene groups to which acetyl groups are bonded from the amount of all ethylene groups in the main chain and dividing the obtained value by the amount of all ethylene groups in the main chain. The degree of acetalization (degree of butyralization) should be calculated, for example, from the results measured by a method in accordance with JIS K6728 "Testing methods for polyvinyl butyral".

The degree of acetylation of the polyvinyl acetal resin is preferably 30 mol % or less, more preferably 20 mol % or less, further preferably 10 mol % or less, and still further preferably 2 mol % or less. When the degree of acetylation is equal to or less than the upper limits, the moisture resistance of the interlayer film and laminated glass increases. The degree of acetylation is not particularly limited but is preferably 0.01 mol % or more, more preferably 0.1 mol % or more.

The degree of acetylation is the value, expressed in percentage, of the mole fraction obtained by dividing the amount of ethylene groups to which acetyl groups are bonded, by the amount of all ethylene groups in the main chain. The amount of ethylene groups to which acetyl groups are bonded can be measured, for example, in accordance with JIS K6728 "Testing methods for polyvinyl butyral".

### (Ethylene-Vinyl Acetate Copolymer Resin)

The ethylene-vinyl acetate copolymer resin may be a non-crosslinked ethylene-vinyl acetate copolymer resin and may be a high temperature crosslinked ethylene-vinyl acetate copolymer resin. As the ethylene-vinyl acetate copolymer resin, an ethylene-vinyl acetate modified product resin such as an ethylene-vinyl acetate copolymer saponified product or a hydrolysate of ethylene-vinyl acetate can also be used.

The ethylene-vinyl acetate copolymer resin preferably has a vinyl acetate content of 10 to 50% by mass, more preferably 20 to 40% by mass, as measured in accordance with JIS K 6730 "Testing methods for ethylene/vinyl acetate copolymer materials" or JIS K 6924-2: 1997. By setting the vinyl acetate content at these lower limit values or more, the adhesiveness to laminated glass members increases, and the penetration resistance of laminated glass easily becomes good. By setting the vinyl acetate content at these upper limit values or less, the breaking strength of the interlayer film increases, and the impact resistance of laminated glass is good.

### (Ionomer Resin)

The ionomer resin is not particularly limited, and various ionomer resins can be used. Specific examples include an ethylene-based ionomer, a styrene-based ionomer, a perfluorocarbon-based ionomer, a telechelic ionomer, and a polyurethane ionomer. Among these, an ethylene-based ionomer is preferred in terms of good mechanical strength, durability, transparency, and the like of laminated glass and in terms of excellent adhesiveness to laminated glass members.

As the ethylene-based ionomer, an ionomer of an ethylene-unsaturated carboxylic acid copolymer is preferably used because it is excellent in transparency and toughness. The ethylene-unsaturated carboxylic acid copolymer is a copolymer having at least a constituent unit derived from ethylene and a constituent unit derived from an unsaturated carboxylic acid and may have a constituent unit derived from another monomer.

Examples of the unsaturated carboxylic acid include acrylic acid, methacrylic acid, and maleic acid. Acrylic acid and methacrylic acid are preferred, and methacrylic acid is particularly preferred. Examples of another monomer include an acrylate, a methacrylate, and 1-butene.

The ethylene-unsaturated carboxylic acid copolymer preferably has 75 to 99 mol % of the constituent unit derived from ethylene and preferably has 1 to 25 mol % of the constituent unit derived from the unsaturated carboxylic acid, based on 100 mol % of all constituent units of the copolymer.

The ionomer of the ethylene-unsaturated carboxylic acid copolymer is an ionomer resin obtained by neutralizing or crosslinking at least some of the carboxyl groups of the ethylene-unsaturated carboxylic acid copolymer with metal ions, and the degree of neutralization of the carboxyl groups is usually 1 to 90%, preferably 5 to 85%.

Examples of the ion source for the ionomer resin include alkali metals such as lithium, sodium, potassium, rubidium, and cesium, and polyvalent metals such as magnesium, calcium, and zinc. Sodium and zinc are preferred.

The method for producing the ionomer resin is not particularly limited, and the ionomer resin can be produced by a conventionally known production method. For example, when an ionomer of an ethylene-unsaturated carboxylic acid copolymer is used as the ionomer resin, for example, ethylene and an unsaturated carboxylic acid are subjected to radical copolymerization under high temperature and high pressure to produce an ethylene-unsaturated carboxylic acid copolymer. Then, the ethylene-unsaturated carboxylic acid copolymer is reacted with a metal compound including the ion source, and thus an ionomer of the ethylene-unsaturated carboxylic acid copolymer can be produced.

### (Polyurethane Resin)

Examples of the polyurethane resin include a polyurethane obtained by reacting an isocyanate compound with a diol compound, and a polyurethane obtained by reacting an isocyanate compound, a diol compound, and further a chain extender such as a polyamine. The polyurethane resin may contain a sulfur atom. In that case, part or all of the diol should be selected from the group consisting of a polythiol and a sulfur-containing polyol. The polyurethane resin can make the adhesiveness to organic glass good. Therefore, the polyurethane resin is preferably used when the laminated glass member are organic glass.

### (Thermoplastic Elastomer)

Examples of the thermoplastic elastomer include a styrene-based thermoplastic elastomer and an aliphatic polyolefin. The styrene-based thermoplastic elastomer is not particularly limited, and a known one can be used. The styrene-based thermoplastic elastomer generally has a styrene monomer polymer block that is a hard segment, and a conjugated diene compound polymer block or its hydrogenated block that is a soft segment. Specific examples of the styrene-based thermoplastic elastomer include a styrene-isoprene diblock copolymer, a styrene-butadiene diblock copolymer, a styrene-isoprene-styrene triblock copolymer, a styrene-butadiene/isoprene-styrene triblock copolymer, a styrene-butadiene-styrene triblock copolymer, and their hydrogenated products.

The aliphatic polyolefin may be a saturated aliphatic polyolefin or an unsaturated aliphatic polyolefin. The aliphatic polyolefin may be a polyolefin including a chain olefin as a monomer, or a polyolefin including a cyclic olefin as a monomer. From the viewpoint of effectively enhancing the storage stability and sound insulation properties of the interlayer film, the aliphatic polyolefin is preferably a saturated aliphatic polyolefin.

Examples of the material of the aliphatic polyolefin include ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4-nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene, and vinylcyclohexane.

### (Plasticizer)

The interlayer film may further contain a plasticizer. The interlayer film has one or a plurality of resin layers, as described above, and each resin layer (namely, for example, the first resin layer, or each of the first and second resin layers) may contain a plasticizer in addition to the thermoplastic resin.

By containing the plasticizer, each resin layer is flexible and, as a result, enhances the flexibility of laminated glass and also enhances the penetration resistance. Further, it is also possible to enhance adhesiveness to a laminated glass member. The plasticizer is particularly effective when contained when a polyvinyl acetal resin is used as the thermoplastic resin. Therefore, each resin layer, for example, the first resin layer or the first and second resin layers, more preferably contains a polyvinyl acetal resin and a plasticizer.

Examples of the plasticizer include organic ester plasticizers such as a monobasic organic acid ester and a polybasic organic acid ester, and phosphorus-based plasticizers such as an organic phosphate-based plasticizer and an organic phosphite-based plasticizer. Among them, organic ester plasticizers are preferred.

Examples of the organic ester plasticizers include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, an oil-modified sebacic alkyd, a mixture of a phosphate and an adipate, and a mixed adipate. Examples of the mixed adipate include an adipate made from two or more kinds of alcohols selected from the group consisting of an alkyl alcohol having 4 to 9 carbon atoms and a cyclic alcohol having 4 to 9 carbon atoms.

Among the plasticizers, triethylene glycol-di-2-ethylhexanoate (3GO) is particularly preferably used.

The content of the plasticizer in each resin layer (for example, each of the first resin layer or the first and second resin layers) is not particularly limited but is preferably 10 parts by mass or more and 100 parts by mass or less based on 100 parts by mass of the thermoplastic resin. When the content of the plasticizer is 10 parts by mass or more, each resin layer is moderately flexible, and the penetration resistance, the adhesiveness, and the like are good. When the content of the plasticizer is 100 parts by mass or less, the separation of the plasticizer from each resin layer is prevented. The content of the plasticizer in each resin layer is more preferably 20 parts by mass or more, further preferably 30 parts by mass or more and further preferably 35 parts by mass or more, and more preferably 70 parts by mass or less and further preferably 63 parts by mass or less.

in the interlayer film, the resin or the resin and the plasticizer are main components, and in the interlayer film, the total amount of the thermoplastic resin and the plasticizer is usually 70% by mass or more, preferably 80% by mass or more, and further preferably 90% by mass or more and less than 100% by mass based on the total amount of the interlayer film. By setting the total amount at less than 100% by mass, the interlayer film can contain an additive such as the colorant.

Also in each resin layer, the resin or the resin and the plasticizer are main components, and in each resin layer (for example, each of the first resin layer or the first and second resin layers), the total amount of the thermoplastic resin and the plasticizer is usually 70% by mass or more, preferably 80% by mass or more, and further preferably 90% by mass or more and less than 100% by mass based on the total amount of each resin layer.

### [Other Additives]

Each resin layer of the present invention may contain other additive(s) than the above, and may contain each additive such as an ultraviolet absorbent, an antioxidant, a light stabilizing agent, an adhesion modifier, a heat shielding agent, a fluorescent brightener, and a crystal nucleating agent. The interlayer film of the present invention has one or two or more kinds of resin layers as described above, and each resin layer may appropriately contain at least one selected from the group consisting of these additives.

### <Layer Configuration>

The layer configuration of the interlayer film of the present invention will be described in more detail below.

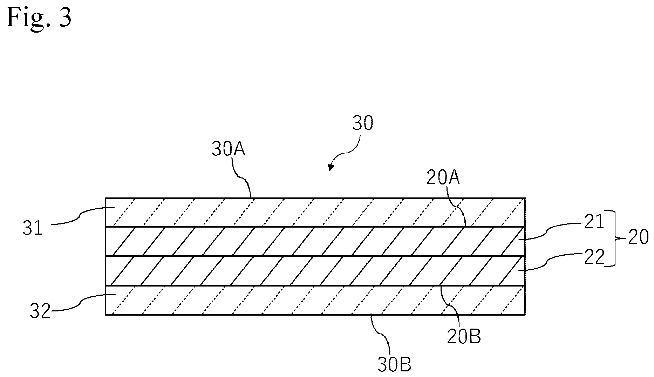

In the present invention, the interlayer film may include the first resin layer as a single layer, or may be an interlayer film 20 including a first resin layer 21 and a second resin layer 22, namely, including two layers as shown in Fig. 3. The first resin layer 21 and the second resin layer 22 are provided with being laminated in the thickness direction. in the interlayer film 20 including two layers, the first resin layer 21 constitutes one surface 20A of the interlayer film (surface on the first resin layer side) and the second resin layer 21 constitutes the other surface 20B of the interlayer film (surface on the second resin layer side), and these layers respectively serve as adhesive surfaces to laminated glass members (first and second laminated glass members 31 and 32) of laminated glass 30. Here, a surface of the first laminated glass member 31 serves as the surface on the first resin layer side (surface 30A) of the laminated glass 30 and a surface of the second laminated glass member 32 serves as the surface on the second resin layer side (surface 30B) of the laminated glass.

The interlayer film may be in a form in which at least one of the first resin layer or the second resin layer is provided in the form of a plurality of layers, and, for example, the first resin layer may be provided in the form of a plurality of layers to provide a three-layer structure of first resin layer/second resin layer/first resin layer, or a three-layer structure of second resin layer/first resin layer/second resin layer may be provided. The second resin layer and the first resin layer may be continuously provided, and the interlayer film may have a structure of first resin layer/second resin layer/second resin layer. The interlayer film may have a structure of four or more layers.

### (Sound insulation performance)

When the interlayer film has a plurality of resin layers provided and the number of the resin layers is at least 3, sound insulation performance may be imparted by a three-layer structure in which the center resin layer serves as a core layer and the layers provided on both surfaces of the center resin layer serve as skin layers. In this case, the interlayer film may appropriately contain any other resin layer than such two skin layers and one core layer.

The core layer may be the first resin layer or the second resin layer, and is preferably the second resin layer. The skin layers may be each any of the first and second resin layers, and at least one thereof is preferably the first resin layer.

All the resins used in the skin layers and the core layer are each preferably a polyvinyl acetal resin, and more preferably a polyvinyl butyral resin.

The skin layers and the core layer each preferably contain a plasticizer as described above. The content of the plasticizer based on 100 parts by mass of the thermoplastic resin in the core layer is preferably higher than the content of the plasticizer based on 100 parts by mass of the thermoplastic resin in the skin layers, and the difference in content is preferably 5 parts by mass or more and 60 parts by mass or less, more preferably 10 parts by mass or more and 50 parts by mass or less, and further preferably 15 parts by mass or more and 35 parts by mass or less. By allowing the content of the plasticizer in the core layer to be higher, sound insulation performance is easily enhanced.

The amount of hydroxyl groups in the polyvinyl acetal resin in the core layer is preferably smaller than the amount of hydroxyl groups in the polyvinyl acetal resin in the skin layers, and the difference in amount of hydroxyl groups is preferably 1 mol % or more and 20 mol % or less, more preferably 2 mol % or more and 15 mol % or less, and further preferably 2 mol % or less and 10 mol % or less. By allowing the amount of hydroxyl groups in the core layer to be smaller, the content of the plasticizer is easily higher and sound insulation performance is also easily enhanced.

### (Barrier layer)

While the above description is made based on the second resin layer to be used as a clear layer or a colored layer, the second resin layer may be a layer to which any other function than those of the above-described clear layer and colored layer is imparted, or may be, for example, a barrier layer. The barrier layer is disposed between two resin layers (for example, between two of the first resin layers, between two of the second resin layers, or between the first resin layer and the second resin layer), to prevent components (such as a colorant and a plasticizer) contained in such a resin layer from moving to another resin layer.

When the second resin layer is used as the barrier layer, any known resin film may be used, and, for example, a polyester film such as a polyethylene terephthalate (PET) film, a polyolefin film, a polyamide film, a polyimide film, a polycarbonate film, or an acrylic resin film can be used. In particular, any of an acrylic resin film or a PET film is preferably used, and a PET film is more preferred. The acrylic resin used in the acrylic resin film is preferably an acrylic polymer containing a hydroxyl group-containing (meth)acrylate-derived structural unit, and specific examples include polyhydroxypropyl methacrylate (HPMA resin) and polyhydroxyethyl methacrylate (HEMA resin).

The first resin layer need not be provided on the entire region of the interlayer film, and may be provided on a partial region of the interlayer film. In the same manner, the second resin layer need not be provided on the entire region of the interlayer film, and may be provided on a partial region of the interlayer film. When the first resin layer is provided in the form of a plurality of layers, only one portion of the first resin layer may be provided on such a partial region. In the same manner, when the second resin layer is also provided in the form of a plurality of layers, only one portion of the second resin layer may be provided on such a partial region.

The second resin layer constituting a colored layer should be preferably provided on a partial region of the interlayer film. For example, when the interlayer film has a laminated structure of first resin layer/second resin layer (clear layer)/second resin layer (colored layer)/second resin layer (clear layer), the second resin layer (colored layer) may be provided only on a partial region of the interlayer film.

That is, such a partial region may have a laminated structure of first resin layer/second resin layer (clear layer)/second resin layer (colored layer)/second resin layer (clear layer) and the remaining region may have a laminated structure of first resin layer/second resin layer (clear layer)/second resin layer (clear layer). In this case, such two second resin layers (clear layer) may be integrated to constitute one second resin layer (clear layer) in a region where no second resin layer (colored layer) is provided.

For example, even in the case of a layer structure of first resin layer/second resin layer (colored layer)/second resin layer (clear layer), such a second resin layer (colored layer) may be provided only on a partial region of the interlayer film.

That is, such a partial region may have a laminated structure of first resin layer/second resin layer (colored layer)/second resin layer (clear layer) and the remaining region may have a laminated structure of first resin layer/second resin layer (clear layer).

For example, a layer structure of second resin layer/first resin layer/second resin layer may be adopted and such a first resin layer may be provided only on such a partial region, and in this case, such a partial region may have a laminated structure of second resin layer/first resin layer/second resin layer and the remaining region may have a structure of second resin layer/second resin layer. In this case, such two second resin layers may be integrated to constitute one second resin layer in a region where no first resin layer is provided.

For example, in a laminated structure of second resin layer (clear layer)/first resin layer/second resin layer (clear layer)/second resin layer (color layer)/second resin layer (clear layer), such first resin layer and second resin layer (color layer) may be provided only on a partial region.

That is, such a partial region may have a laminated structure of second resin layer (clear layer)/first resin layer/second resin layer (clear layer)/second resin layer (color layer)/second resin layer (clear layer) and the remaining region may have a laminated structure of second resin layer (clear layer)/second resin layer (clear layer)/second resin layer (clear layer). In this case, such two or three second resin layers (clear layer) may be integrated to constitute one second resin layer (clear layer) in a region where no first resin layer and no second resin layer (color layer) are provided.

The thicknesses of the first and second resin layers may be fixed or changed. For example, as described above, the first and second resin layers provided in a partial region of the interlayer film may each have a cross-sectional shape which has a smaller thickness as it is closer to a region where no first and second resin layers are provided.

The interlayer film may have a cross-sectional rectangular shape and a fixed thickness, but the cross-sectional shape of the interlayer film is not limited to a cross-sectional rectangular shape, and the interlayer film may have, for example, a wedge shape. An interlayer film having a wedge shape has a cross section where one end and the other end opposite to the one end have different thicknesses from each other, and the cross section may have, for example, a trapezoidal shape, but may have a triangular shape. For the wedge-shaped interlayer film, the thickness changes from one end toward other end, but the thickness need not change in all portions, and the interlayer film has a portion where the thickness is fixed and the portion where the thickness changes may be partial.

### [Thickness of Each Layer]

The thickness of the first resin layer is preferably 0.1 mm or more and 2.5 mm or less, more preferably 0.2 mm or more and 2.0 mm or less, and further preferably 0.25 mm or more and 1.5 mm or less. By adjusting the content of the filler (A) in the first resin layer within the above range and also adjusting the thickness within such a range, the interlayer film easily ensures see-through properties and also a color travel is easily generated.

The thickness of the second resin layer is preferably 0.1 mm or more and 2.5 mm or less, more preferably 0.2 mm or more and 2.0 mm or less, and further preferably 0.25 mm or more and 1.5 mm or less. By setting the thickness of the second resin layer within the range, various functions can be imparted with the thickness of the interlayer film being not larger than necessary. By not only allowing the second resin layer to be a colored layer and adjusting the content of the colorant in the colored layer within the range, but also setting the thickness within the range, the interlayer film can properly absorb light reflected in the first resin layer to make see-through properties from the second resin layer side good.

The thickness ratio between the first resin layer and the second resin layer is preferably 10:1 to 1:50. By setting the thickness ratio within the range, not only a color travel is easily made, but also see-through properties and the like are easily ensured even when the second resin layer is a colored layer. From these viewpoints, the thickness ratio between the first resin layer and the second resin layer is more preferably 5:1 to 1:25 and further preferably 1:1 to 1:10.

The thickness of the interlayer film is preferably 0.2 mm or more and 2.6 mm or less, more preferably 0.25 mm or more and 2.2 mm or less, and further preferably 0.3 mm or more and 1.75 mm or less.

The first and second resin layers and the interlayer film may be changed in thickness as described above, and in that case, the above-described thicknesses of the first and second resin layers and the thickness of the interlayer film mean the thicknesses of portions where the first resin layer is the thickest in the region where the first resin layer is present. The thickness of the first resin layer means the total thickness when the first resin layer has two or more layers, and the same applies to the second resin layer.

### [Optical Properties of Interlayer Film]

In the L*a*b* color system for the interlayer film of the present invention, preferably, a* and b* of transmitted light obtained at an incident angle of 5° satisfy one of or both -10 ≤ a* ≤ 5 and 3 ≤ b* ≤ 15 and a* and b* of transmitted light obtained at an incident angle of 60° satisfy one of or both -10 ≤ a* ≤ 10 and 0 ≤ b* ≤ 10. When a* and b* of transmitted light at an incident angle of 5° and an incident angle of 60° are within the ranges, transmitted light with a suppressed chromatic value can be provided and therefore a muted-inspired design can be obtained and a sense of high quality can be exhibited.

More preferably, a* and b* of transmitted light obtained at an incident angle of 5° satisfies both -10 ≤ a* ≤ 5 and 3 ≤ b* ≤ 15 and a* and b* of transmitted light obtained at an incident angle of 60° satisfies both -10 ≤ a* ≤ 10 and 0 ≤ b* ≤ 10. Further preferably, a* and b* of transmitted light at an incident angle of 5° satisfies both -10 ≤ a* ≤ 3 and 2 ≤ b* ≤ 10 and a* and b* of transmitted light at an incident angle of 60° satisfies both -8 ≤ a* ≤ 8 and 0.5 ≤ b* ≤ 8.

In the L*a*b* color system for the interlayer film of the present invention, preferably, a* and b* of reflected light obtained at an incident angle of 5° satisfy one of or both -10 ≤ a* ≤ 10 and -10 ≤ b* ≤ 3 and a* and b* of reflected light obtained at an incident angle of 60° satisfy one of or both -5 ≤ a* ≤ 5 and -5 ≤ b* ≤ 5. When a* and b* of the reflected light are within the ranges, the interlayer film inhibits the reflected light from being colored and the color change of the reflected light depending on a viewing angle is performed with the chromatic value being suppressed, and therefore a muted-inspired design can be obtained and a sense of high quality can be exhibited.

In the L*a*b* color system for the interlayer film of the present invention, preferably, a* and b* of reflected light obtained at an incident angle of 5° satisfies both -10 ≤ a* ≤ 10 and -10 ≤ b* ≤ 3 and reflected light obtained at an incident angle of 60° satisfies both -5 ≤ a* ≤ 10 and -5 ≤ b* ≤ 5. For the interlayer film of the present invention, more preferably, the reflected light at an incident angle of 5° satisfies both -3 ≤ a* ≤ 10 and -10 ≤ b* ≤ 1 and the reflected light at an incident angle of 60° satisfies both -3 ≤ a* ≤ 5 and -3 ≤ b* ≤ 4.

Herein, a* and b* of transmitted light obtained at incident angles of 5°, 20°, 40°, and 60° for the interlayer film in the present invention are each a value determined by bonding two standard clear glass plates via the interlayer film to produce laminated glass, and subjecting the laminated glass to measurement. The same also applies to a* and b* of reflected light.

Herein, in measurement of a* and b* of each of transmitted light and reflected light, such measurement should be made by allowing light to be incident to one surface of laminated glass. Herein, the meaning of "one surface of laminated glass" is as described later.

In the interlayer film of the present invention, for laminated glass made by adhering two standard clear glass plates to each other via the interlayer film, the visible light reflectance (Rv1) measured on one surface of the laminated glass is preferably 1% or more. When the visible light reflectance (Rv1) is 1% or more, visible light is moderately reflected in the first resin layer and reflected light allows the above-described metallic feeling and grain pattern to be easily exhibited. The visible light reflectance (Rv1) is preferably 3% or more, and more preferably 7% or more. The visible light reflectance (Rv1) is preferably 28% or less, more preferably 22% or less, and further preferably 20% or less from the viewpoint that see-through properties and the like are ensured.

In the interlayer film of the present invention, for laminated glass made by adhering two standard clear glass plates to each other via the interlayer film, the visible light reflectance (Rv2) measured on the other surface of the laminated glass is preferably 28% or less, more preferably 22% or less, and further preferably 20% or less from the viewpoint of see-through properties and the like, and is still further preferably 10% or less from the viewpoint of allowing a metallic feeling and the like to be easily exhibited in view from the one surface.

The visible light reflectance (Rv2) should be, for example, 0% or more, is preferably equal to or more than a certain value from the viewpoint of preventing more light than necessary from being absorbed by the second resin layer and from the viewpoint of allowing a metallic feeling and a grain pattern in view from the other surface to be easily exhibited, and is, for example, 0.1% or more, preferably 1.0% or more, and more preferably 3% or more.

The visible light reflectance (Rv1) and the visible light reflectance (Rv2) can be measured in accordance with JIS 3106 (2019) using a spectrophotometer.

As shown in Fig. 3, when a first resin layer 21 is disposed on the one surface 20A side of an interlayer film 20 and a second resin layer 22 as a colored layer is disposed on the other surface 20B side of the interlayer film, the phrase "one surface of laminated glass" is a surface 30A of laminated glass, the surface being on the side where the first resin layer 21 of the interlayer film is provided. The phrase "the other surface of laminated glass" is a surface 30B of laminated glass, the surface being on the side where the second resin layer 22 constituting a colored layer is provided. In this case, any layer (for example, second resin layer (clear layer)) other than the first resin layer 21 and the second resin layer 22 (colored layer) may be appropriately provided further outside the first resin layer 21 and the second resin layer 22 (colored layer).

When the first resin layer 21 is not disposed on the one surface 20A side of the interlayer film and the second resin layer 22 constituting a colored layer is not disposed on the other surface 20B side of the interlayer film, any surface of laminated glass is defined as "one surface of laminated glass". The same also applies to the following haze and visible light transmittance measurement.

Examples of such a case where the first resin layer 21 is not disposed on the one surface 20A side of the interlayer film and the second resin layer 22 constituting a colored layer is not disposed on the other surface 20B side of the interlayer film include a case where the first resin layer as a single layer is included. Examples also include a case where the first resin layer (or second resin layer (colored layer)) is on both the one surface 20A side and the other surface 20B side, as in the case of first resin layer/second resin layer/first resin layer, second resin layer (colored layer)/first resin layer/second resin layer (colored layer).

In the interlayer film of the present invention, for laminated glass made by adhering two standard clear glass plates to each other via the interlayer film, the haze (Haze2) measured on the other surface of the laminated glass is preferably 16% or less. By setting the haze (Haze2) at 16% or less, laminated glass is easily obtained which is suppressed in light scattering, high in see-through properties and less in cloudiness. The haze (Haze2) is more preferably 10% or less, further preferably 6% or less, and still further preferably 3% or less. As the haze (Haze2) becomes lower, it becomes better from the viewpoint of securement of see-through properties and from the viewpoint of suppression of cloudiness, and the haze should be 0% or more and is preferably 0.5% or more in practical use. The haze can be measured in accordance with JIS K6714.

In the interlayer film of the present invention, for laminated glass made by adhering two standard clear glass plates to each other via the interlayer film, the visible light transmittance (Tv2) measured on the other surface of the laminated glass is relatively low when a colored layer is provided as the second resin layer or the first resin layer serves as a colored layer. In this case, the visible light transmittance (Tv2) is preferably 0.5% or more, more preferably 1% or more, further preferably 5% or more, and still further preferably 10% or more from the viewpoint of see-through properties. When a colored layer is provided, the visible light transmittance (Tv2) is, for example, 70% or less, preferably 50% or less, and more preferably 30% or less in order to exert the effect of the colored layer provided.

In this regard, when the interlayer film has no colored layer, the visible light transmittance (Tv2) is preferably 50% or more, more preferably 60% or more, and further preferably 70% or more from the viewpoint of transparency and the like. When the interlayer film has no colored layer, the visible light transmittance (Tv2) is preferably 95% or less, more preferably 90% or less, and further preferably 85% or less so that the first resin layer can appropriately serve as a color traveling layer. The visible light transmittance can be measured in accordance with JIS R3212 (2015).

The standard clear glass plates used in the measurement of a* and b*, and the measurement of visible light reflectance (Rv1, Rv2), visible light transmittance (Tv2), and haze (Haze2) have a thickness of 2.5 mm and have a visible light transmittance of 90.5% as measured in accordance with JIS R 3106: 1998. For the clear glass plates, a* = -0.6, b* = 0.2, and the haze is 0.2% or less using the CIE standard illuminant D65 and the color matching functions for a field of view of 10° prescribed in JIS Z 8781-1 (2012), JIS Z 8781-2 (2012), and JIS Z 8781-4 (2013).

The interlayer film may have a region having no first resin layer and may be changed in thicknesses of the first and second resin layers, and in that case, the above a*, b*, Rv1, Rv2, Tv2, and Haze2 should be measured in the same region where the thickness of the first resin layer is the largest.

### (Method for Producing Interlayer Film)

It is recommended that the interlayer film of the present invention be obtained, without any particular limitations, by producing each resin composition for forming each resin layer, forming the obtained resin composition into a resin layer, and laminating a plurality of resin layers to provide a multilayer structure. It is recommended that each resin composition be obtained, for example, by mixing with the thermoplastic resin, the filler (A) or the colorant, the plasticizer, and other additives, blended as needed.

Here, the filler (A) can be blended in addition to the thermoplastic resin in the first resin layer, and, for example, when a plasticizer is used, the filler (A) can be blended into the plasticizer, sufficiently dispersed in the plasticizer, and then mixed with the thermoplastic resin, from the viewpoint of enhancing the dispersibility in the resin composition. At this time, a dispersant or the like may be appropriately added to the plasticizer. The colorant can be blended in addition to the thermoplastic resin in the second resin layer, and, for example, when the plasticizer is used, the colorant can be blended into the plasticizer, sufficiently dispersed in the plasticizer, and then mixed with the thermoplastic resin, from the viewpoint of enhancing the dispersibility in the resin composition. At this time, a dispersant or the like may be appropriately added to the plasticizer.

When an additive other than the filler (A) or the colorant is used, the additive may be blended with and sufficiently dispersed in the plasticizer and then mixed with the thermoplastic resin, depending on the type of the additive.

The interlayer film should be formed by extrusion, press molding, or the like. A method is preferred for extrusion, in which two or more extruders are provided, a multilayer feed block is attached to the tips of the plurality of extruders, and coextrusion is performed. When a plurality of resin layers are provided, and there are two or more resin layers having the same composition, the two or more resin layers having the same composition may be extruded from one extruder. Further, for the resin layers, the thickness may change along the direction orthogonal to the thickness direction, and in that case, the thickness should be changed, for example, by adjusting the amount of the resin supplied, or the like.

The interlayer film may also be obtained by preparing a plurality of resin layers, disposing the plurality of resin layers between a pair of laminated glass members to obtain a laminated body, and performing thermocompression molding (press molding) of the laminated body to produce laminated glass and also produce the interlayer film together.

The filler (A), when has an orientable anisotropy as in the case of having a flat plate shape, can be oriented so that the longitudinal direction or the surface direction of the filler (A) is along with the surface direction of the interlayer film (each resin layer) by the above press molding, extrusion, or the like.

### <Laminated Glass>

The present invention further provides laminated glass. The laminated glass includes two laminated glass members (first and second laminated glass members), and an interlayer film disposed between these laminated glass members. The two laminated glass members are adhered to each other via the interlayer film. For the interlayer film, one surface is adhered to one laminated glass member, and the other surface is adhered to the other laminated glass member. The configuration of the interlayer film is as described above.

The laminated glass should be produced by disposing the above-described interlayer film between two laminated glass members and integrating these by thermocompression molding or the like. The laminated glass may also be produced by preparing a plurality of resin layers and disposing the plurality of resin layers between a pair of laminated glass members to obtain a laminated body, and integrating these by thermocompression molding or the like of the laminated body.

### (Laminated Glass Member)

Examples of the laminated glass members used in the laminated glass include glass plates, and the glass plates may be any of inorganic glass and organic glass, and are preferably inorganic glass. The inorganic glass is not particularly limited, and examples thereof include clear glass, float plate glass, polished plate glass, figured glass, mesh wire glass, line wire glass, and green glass.

As the organic glass, organic glass referred to as resin glass is generally used. The organic glass is not particularly limited, and examples thereof include organic glass composed of a resin such as a polycarbonate, an acrylic resin, an acrylic copolymer resin, or a polyester.

The two laminated glass members may be composed of the same type of material as each other or may be composed of different materials. For example, it is possible that one is inorganic glass and the other is organic glass, but it is preferred that both the two laminated glass members be inorganic glass or organic glass.

The thicknesses of the laminated glass member are not particularly limited but are, for example, about 0.1 to 15 mm, preferably 0.5 to 5 mm. The thicknesses of the laminated glass member may be the same as each other or may be different but are preferably the same.

The laminated glass of the present invention can be used as window glass for various vehicles such as automobiles, conveyances such as aircraft and ships, buildings, and the like but is preferably used as automobile laminated glass. The automobile laminated glass may be any of windshield glass (front glass), side glass, rear glass, and roof glass.

Window glass is commonly used as a member for partitioning the exterior and the interior in each use. When the interlayer film is as shown in Fig. 3 in which the first resin layer 21 is disposed on the one surface 20A side of the interlayer film 20 and the second resin layer 22 is constituted from a colored layer and is disposed on the other surface 20B side, preferably, the surface 20A on the first resin layer 21 side of the interlayer film should be disposed on the exterior side (namely, car exterior side in automobiles) and the surface 20B on the second resin layer 22 side of the interlayer film should be disposed on the interior side (car exterior side in automobiles). In this case, any layer (for example, second resin layer (clear layer)) other than the first resin layer 21 and the second resin layer 22 (colored layer) may be appropriately provided further outside the first resin layer 21 and the second resin layer 22 (colored layer).

### Examples

The present invention will be described in more detail by Examples, but the present invention is not limited in any way by these examples.

The measurement methods and the evaluation methods in the present Examples are as follows.

### [a* and b* of transmitted light and reflected light of first resin layer]

A first resin layer was produced by the same method as in each of Examples and Comparative Examples, and laminated glass (laminated glass for measurement) was produced via the obtained first resin layer in the same conditions as in each of Examples and Comparative Examples. One surface of the produced laminated glass for measurement was irradiated at incident angles of 5°, 20°, 40°, and 60° with light from a D65 light source in a field of view of 10° in a measurement wavelength range of 300 nm to 2000 nm, to detect transmitted light on the other surface in a condition of a wavelength interval of 5 nm, and a* and b* were measured with an ultraviolet-visible-near infrared spectrophotometer "V-670" (manufactured by JASCO Corporation) provided with an absolute reflectance measurement unit (ARSN-733). One surface of the produced laminated glass for measurement was irradiated at incident angles of 5°, 20°, 40°, and 60° with light from a D65 light source in a field of view of 10° in a measurement wavelength range of 300 nm to 2000 nm, to detect reflected light on the one surface in a condition of a wavelength interval of 5 nm, and a* and b* were measured with an ultraviolet-visible-near infrared spectrophotometer "V-670" (manufactured by JASCO Corporation) provided with an absolute reflectance measurement unit (ARSN-733).

### [a* and b* of transmitted light and reflected light of interlayer film]

Each laminated glass obtained in Examples and Comparative Examples was subjected to measurement of a* and b* of transmitted light and reflected light by the same method as described above, and the values obtained were determined as the values of a* and b* of transmitted light and reflected light of the interlayer film. Light was applied to be incident from one surface of the laminated glass (surface on the first resin layer side in a two-layer structure).

### [Rv1 and Rv2]

The visible light reflectance (Rv1) on one surface of the laminated glass (surface on the first resin layer side in a two-layer structure) and the visible light reflectance (Rv2) on the other surface of the laminated glass (surface on the second resin layer in a two-layer structure) were determined in accordance with JIS 3106 (2019) using a spectrophotometer ("U-4100" manufactured by Hitachi High-Technologies Corporation).

### [Ra* 1, Rb*1, Ra*2, and Rb*2]

The spectral reflectance was measured on one surface of laminated glass, with a spectrophotometer ("U-4100" manufactured by Hitachi High-Technologies Corporation). The Ra*1 and Rb*1 with a D65 light source in a field of view of 10° were calculated from the spectral reflectance obtained under the measurement conditions of a scan speed of 300 nm/min and a slit width of 8 nm, in accordance with JIS Z 8781 (2009).

The spectral reflectance on the other surface of the laminated glass was measured under the same measurement conditions, and the Ra*2 and the Rb*2 were calculated in the same manner.

### [Tv1 and Tv2]

The visible light transmittance (Tv1) on one surface of the laminated glass and the visible light transmittance (Tv2) on the other surface of the laminated glass were determined in accordance with JIS R 3212 (2015) using a spectrophotometer ("U-4100" manufactured by Hitachi High-Technologies Corporation).

### [Ta*1, Tb*1, Ta*2, and Tb*2]

The spectral transmittance was measured on one surface of the laminated glass, with a spectrophotometer ("U-4100" manufactured by Hitachi High-Technologies Corporation). The Ta*1 and Tb*1 with a D65 light source in a field of view of 10° were calculated from the spectral transmittance obtained under the measurement conditions of a scan speed of 300 nm/min and a slit width of 8 nm, in accordance with JIS Z 8781 (2009).

The spectral reflectance on the other surface of the laminated glass was measured under the same measurement conditions, and the Ta*2 and Tb*2 were calculated in the same manner.

### [Haze]

The haze was measured for obtained laminated glass in accordance with JIS K6714. The haze (Haze1) was measured on one surface of the laminated glass and the haze (Haze2) was measured on the other surface of the laminated glass.

The components used in the Examples and Comparative Examples are as follows.
(1) Thermoplastic Resin
   PVB: polyvinyl butyral resin, degree of acetalization 69 mol %, amount of hydroxyl groups 30 mol %, degree of acetylation 1 mol %, average degree of polymerization of PVA used for synthesis 1700
(2) Plasticizer
   3GO: triethylene glycol di-2-ethylhexanoate
(3) Filler (A)
   Multilayer filler 1: flat plate shape of three-layer structure shown in Fig. 1, including SiO₂ layer (refractive index 1.46) as medium layer and TiO₂ layers (refractive index 2.49) as coating layers, thickness ratio (each coating layer : medium layer =1:8), D50: 14 µm, thickness 0.5 µm, aspect ratio: 2.8
   Multilayer filler 2: flat plate shape of three-layer structure shown in Fig. 1, including SiO₂ layer (refractive index 1.46) as medium layer and TiO₂ layers (refractive index 2.49) as coating layers, thickness ratio (each coating layer : medium layer =1:9), D50: 14 µm, thickness 0.5 µm, aspect ratio: 2.8
   Multilayer filler 3: flat plate shape of three-layer structure shown in Fig. 1, including SiO₂ layer (refractive index 1.46) and TiO₂ layers (refractive index 2.49) as coating layers, thickness ratio (each coating layer : medium layer = 1.0:17), D50: 20 µm, thickness 0.5 µm, aspect ratio: 2.8
   Multilayer filler 4: flat plate shape of three-layer structure shown in Fig. 1, including SiO₂ layer (refractive index 1.46) and TiO₂ layers (refractive index 2.49) as coating layers, thickness ratio (each coating layer : medium layer = 1.2:7.8), D50: 21 µm, thickness 0.5 µm, aspect ratio: 2.8
   Multilayer filler 5: flat plate shape of three-layer structure shown in Fig. 1, including SiO₂ layer (refractive index 1.46) and TiO₂ layers (refractive index 2.49) as coating layers, thickness ratio (each coating layer : medium layer = 1:5), D50: 21 µm, thickness 0.5 µm, aspect ratio: 2.8
   Multilayer filler 6: flat plate shape of three-layer structure shown in Fig. 1, including SiO₂ layer (refractive index 1.46) and TiO₂ layers (refractive index 2.49) as coating layers, thickness ratio (each coating layer : medium layer = 1:9), D50: 19 µm, thickness 0.5 µm, aspect ratio: 2.8
   Glass 1: five-layer structure of TiO₂/SiO₂/glass/SiO₂/TiO₂, D50 = 72 µm, thickness: 2.5 µm, aspect ratio: 1.5
   Glass 2: five-layer structure of TiO₂/SiO₂/glass/SiO₂/TiO₂, D50 = 62 µm, thickness: 2.5 µm, aspect ratio: 1.5
   Colored aluminum 1: "EMR-D46BLA" manufactured by Toyo Aluminium K.K., colored aluminum flake
   Colored aluminum 2: "EMR-D46GRA" manufactured by Toyo Aluminium K.K., colored aluminum flake
(4) Colorant
   Carbon Black: Pigment Black 7 (CAS No.1333-86-4), carbon black pigment

### [Example 1]

### (Making of Interlayer Film)

Multilayer filler 1 was mixed with the plasticizer according to blending in Table 1 and dispersed therein, these were loaded together with the polyvinyl butyral resin (PVB) to an extruder, and kneaded in the extruder to obtain a resin composition for forming a first resin layer. The resin composition obtained was extruded to obtain an interlayer film including a first resin layer as a single layer, having a thickness of 760 µm. The interlayer film was an interlayer film including a single-layer resin layer, and multilayer filler 1 was oriented so that the surface direction thereof was along with the surface direction of the interlayer film.

### (Making of Laminated Glass)

Two clear glasses were provided. Each was 100 mm long by 100 mm wide by 2.5 mm thick. As the clear glasses, the standard clear glasses described herein were used. The interlayer film obtained above was sandwiched between the two clear glasses, and temporarily pressure-bonded by a vacuum packing method. The temporarily pressure-bonded laminated body was retained in an autoclave under conditions of a temperature of 140°C and a pressure of 1.2 MPa for 20 minutes, and then mainly pressure-bonded with a temperature drop to 23°C and returning to atmospheric pressure, to obtain laminated glass in which the two clear glasses were adhered by the interlayer film. For the obtained laminated glass, the optical properties were measured and are shown in Table 1 as the properties of the interlayer film and the laminated glass.

### [Examples 2]

### (Making of interlayer film)

Multilayer filler 1 was mixed with the plasticizer according to blending in Table 1 and dispersed therein, these were loaded together with the polyvinyl butyral resin (PVB) to a coextruder, and kneaded in the coextruder to obtain a resin composition for forming a first resin layer. The plasticizer and the polyvinyl butyral resin (PVB) were loaded to the coextruder according to blending in Table 1, and kneaded in the coextruder to obtain a resin composition for forming a second resin layer. The resin compositions were coextruded in the coextruder to obtain an interlayer film including a first resin layer having a thickness of 760 µm and a second resin layer having a thickness of 760 µm. Next, the interlayer film obtained was used to make laminated glass in the same manner as in Example 1.

### [Examples 3]

### (Making of interlayer film)

Multilayer filler 1 was mixed with the plasticizer according to blending in Table 1 and dispersed therein, these were loaded together with the polyvinyl butyral resin (PVB) to a coextruder, and kneaded in the coextruder to obtain a resin composition for forming a first resin layer. The colorant was mixed with the plasticizer according to blending in Table 1 and dispersed therein, these were loaded together with the polyvinyl butyral resin (PVB) to the coextruder, and kneaded in the coextruder to obtain a resin composition for forming a second resin layer. The resin compositions were coextruded in the coextruder to obtain an interlayer film including a first resin layer having a thickness of 760 µm and a second resin layer having a thickness of 760 µm. Next, the interlayer film obtained was used to make laminated glass in the same manner as in Example 1.

### [Examples 5, 9, 13 and 17 to 20, and Comparative Example 1]

Operations were carried out in the same manner as Example 1 except that blending of the resin composition for forming a first resin layer was changed as described in Tables 1, 2, and 3.

### [Examples 6, 10 and 14, and Comparative Examples 2 and 3]

Operations were carried out in the same manner as Example 2 except that blending of the respective resin compositions for forming first and second resin layers were changed as described in Tables 1, 2, and 3.

### [Examples 4, 7, 8, 11, 12, 15 and 16]

Operations were carried out in the same manner as Example 2 except that blending of the respective resin compositions for forming first and second resin layers were changed as described in Tables 1 and 2.

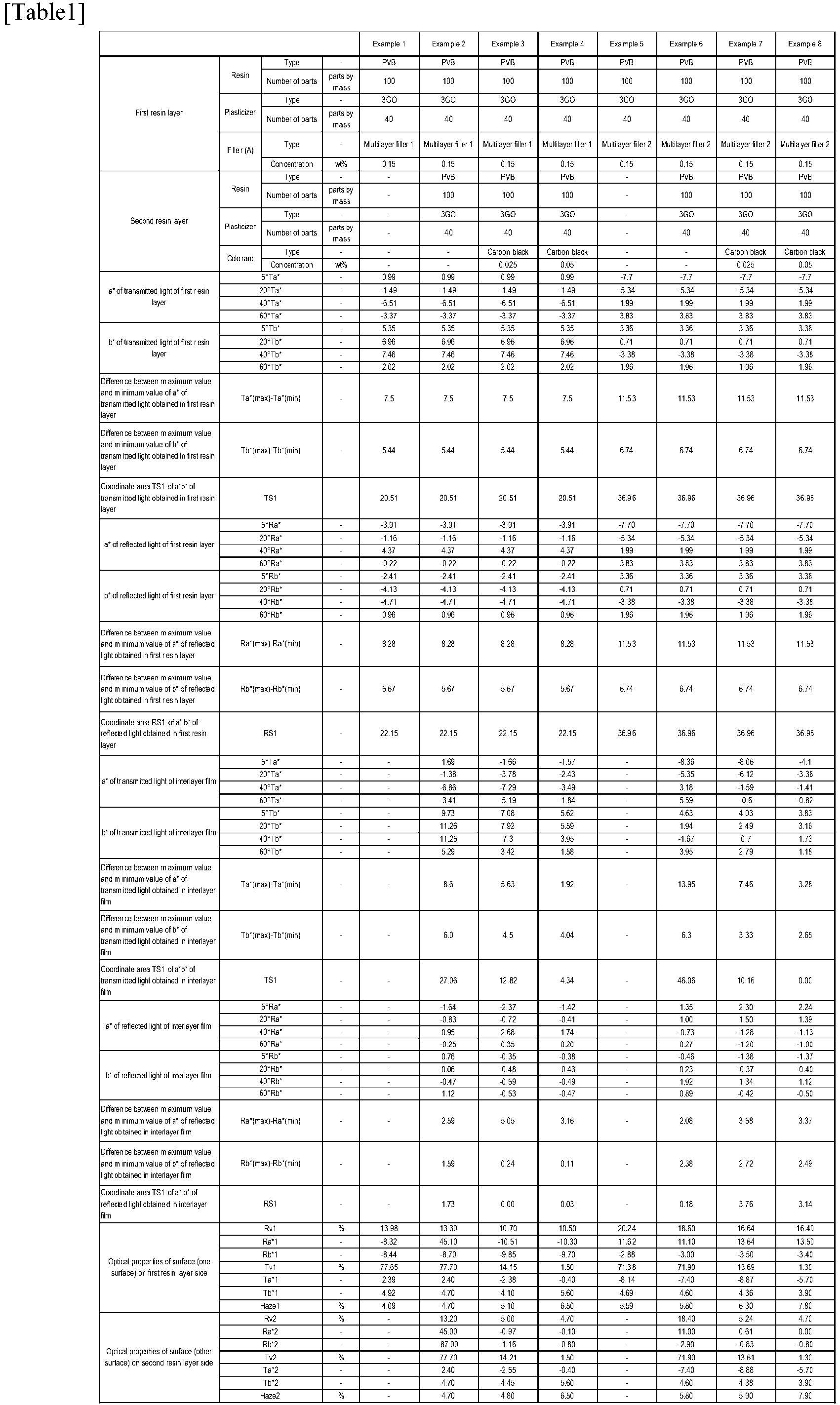

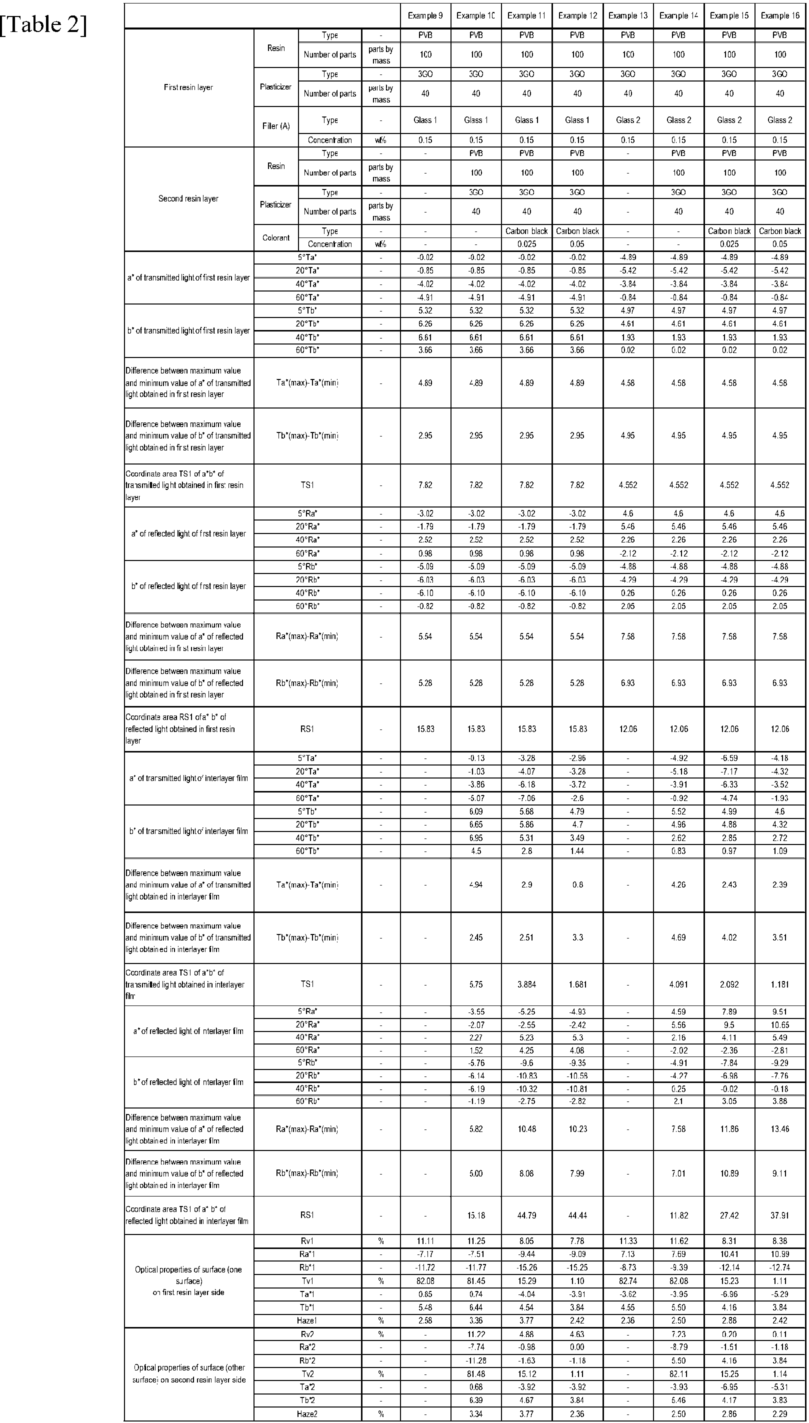

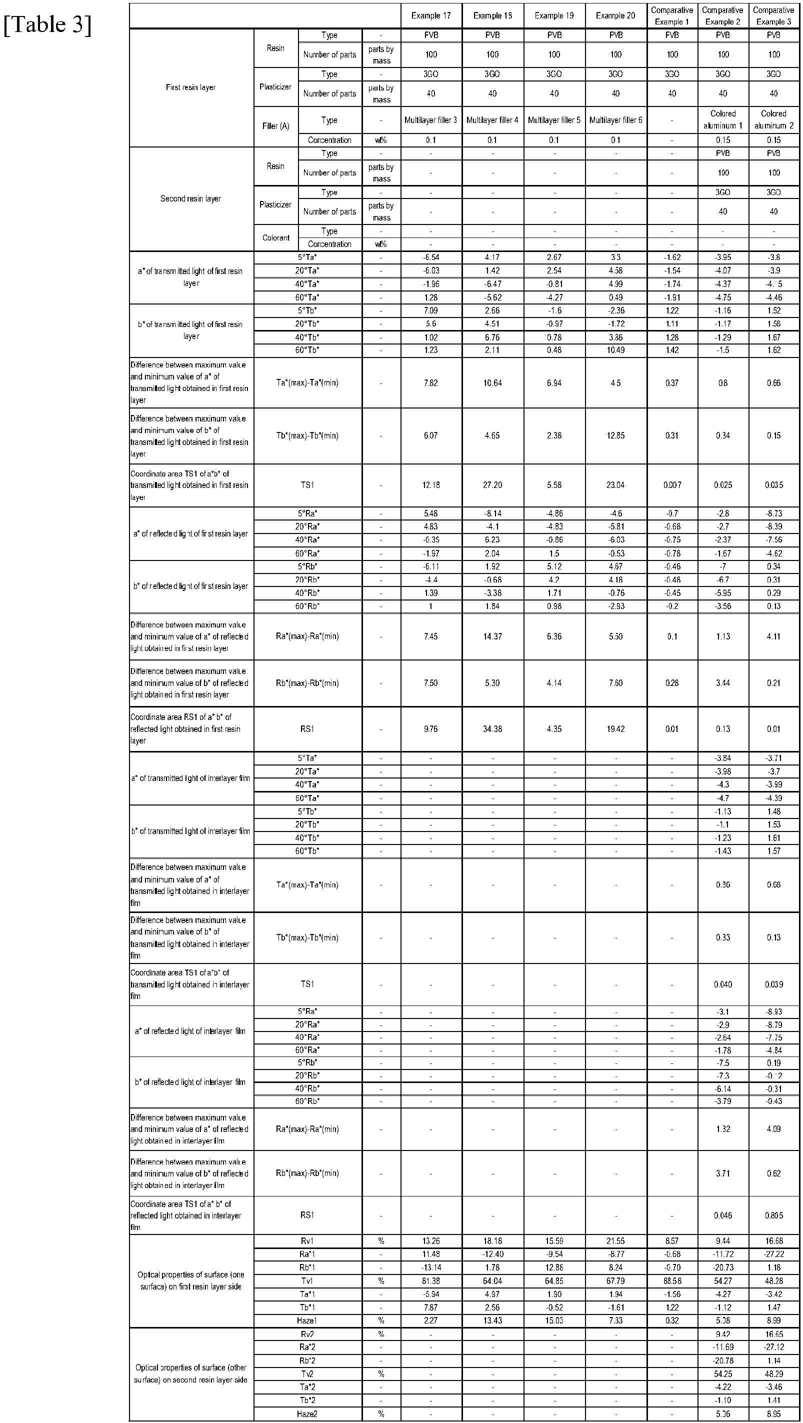

* phr means parts by mass based on 100 parts by mass of PVB.
* wt% is the content (% by mass) in the first resin layer or the second resin layer.
* In some of Examples and Comparative Examples, in which a single-layer resin layer is adopted, the values of a* and b* of each of reflected light and transmitted light for the interlayer film are the same respectively with the values of a* and b* of each of reflected light and transmitted light for the first resin layer, and therefore the descriptions thereof are omitted. In some of Examples and Comparative Examples, in which a single-layer resin layer is adopted, optical properties of laminated glass, even when measured from any surface, are obtained as the same results, and therefore measurement thereof from the other surface is omitted.

As shown in Table 1, in each of Examples 1 to 18, all of the difference between the maximum value and the minimum value of a* of transmitted light obtained at incident angles of 5°, 20°, 40°, and 60°, the difference between the maximum value and the minimum value of b* of the transmitted light at such incident angles, the difference between the maximum value and the minimum value of a* of reflected light at such incident angles, and the difference between the maximum value and the minimum value of b* of the reflected light at such incident angles for the first resin layer satisfied the requirements (1) to (4). Therefore, in the laminated glass obtained in each of Examples, when light was allowed to penetrate through one surface and transmitted light thereof was recognized with the angle being varied, color change was recognized. In addition, in the laminated glass obtained in each of Examples, even when reflected light was visually recognized on a black sheet, color change was recognized with the variation in angle, and high aesthetic quality was obtained.

In Example 19, all of the difference between the maximum value and the minimum value of a* of transmitted light obtained at incident angles of 5°, 20°, 40°, and 60°, the difference between the maximum value and the minimum value of a* of reflected light obtained at such angles, and the difference between the maximum value and the minimum value of b* of the reflected light at such incident angles satisfied the requirements (1), (3), and (4). In this regard, the difference between the maximum value and the minimum value of b* was small. Therefore, in the laminated glass obtained in each of Examples, when light was allowed to penetrate through one surface and transmitted light thereof was recognized with the angle being varied, color change was recognized, but this color change was slightly less recognized.

In Example 20, all of the difference between the maximum value and the minimum value of a* of transmitted light obtained at incident angles of 5°, 20°, 40°, and 60°, the difference between the maximum value and the minimum value of a* of reflected light obtained at such angles, and the difference between the maximum value and the minimum value of b* of the reflected light satisfied the requirements (1), (3), and (4). In this regard, the difference between the maximum value and the minimum value of b* was large. Therefore, in the laminated glass obtained in each of Examples, when light was allowed to penetrate through one surface and transmitted light thereof was visually recognized with the angle being varied, color change was visually recognized, but this color change was slightly extremely recognized.

In the laminated glass obtained in each of Examples 19 and 20, even when reflected light was visually recognized on a black sheet, color change was visually recognized with the variation in angle, and high aesthetic quality was obtained.

In Examples 1 to 8 and 17 to 20, the filler (A) used here was a filler having a multilayer structure of metal oxide, and therefore the laminated glass had an appearance with a strong metallic feeling. In this regard, in Examples 9 to 16, the filler (A) used here was a filler having glass and a metal oxide compound, and therefore a metallic feeling was weak, but light reflected from the filler (A) and light penetrating through the filler (A) were visible as a grain pattern having a gloss feeling, and enabled laminated glass to have special aesthetic quality.

On the contrary, in Comparative Examples 1 to 3, the requirements (1) to (4) were not satisfied and therefore, even when light was allowed to penetrate and recognized with the variation in angle or reflected light was recognized on a black sheet with the variation in angle, almost no color change was recognized and insufficient aesthetic quality was obtained.

### Reference Signs List

10 medium layer
11, 12 coating layer
20 interlayer film for laminated glass
21 first resin layer
22 second resin layer
30 laminated glass
31 first laminated glass member
32 second laminated glass member

## Claims

1. An interlayer film for laminated glass comprising a first resin layer, a difference between a maximum value and a minimum value of a* of transmitted light obtained at incident angles of 5°, 20°, 40°, and 60° in an L*a*b* color system for the first resin layer being 3.0 or more and 15.0 or less.

2. An interlayer film for laminated glass comprising a first resin layer, wherein
a difference between a maximum value and a minimum value of b* of transmitted light obtained at incident angles of 5°, 20°, 40°, and 60° in an L*a*b* color system for the first resin layer is 1.0 or more and 9.0 or less.

3. The interlayer film for laminated glass according to claim 1 or 2, wherein a difference between a maximum value and a minimum value of b* of transmitted light obtained at incident angles of 5°, 20°, 40°, and 60° in the L*a*b* color system for the first resin layer is 2.0 or more and 7.0 or less.

4. The interlayer film for laminated glass according to claim 1 or 2, wherein a coordinate area TS1 of a*b* of transmitted light obtained at incident angles of 5°, 20°, 40°, and 60° in the L*a*b* color system for the first resin layer satisfies 1 ≤ TS1 ≤ 40.

5. An interlayer film for laminated glass comprising a first resin layer, a difference between a maximum value and a minimum value of a* of reflected light obtained at incident angles of 5°, 20°, 40°, and 60° in an L*a*b* color system for the first resin layer being 4.5 or more and 15.0 or less.

6. An interlayer film for laminated glass comprising a first resin layer, a difference between a maximum value and a minimum value of b* of reflected light obtained at incident angles of 5°, 20°, 40°, and 60° in an L*a*b* color system for the first resin layer being 4.0 or more and 8.0 or less.

7. The interlayer film for laminated glass according to claim 5 or 6, wherein a difference between a maximum value and a minimum value of b* of reflected light obtained at incident angles of 5°, 20°, 40°, and 60° in the L*a*b* color system for the first resin layer is 5.0 or more and 7.0 or less.

8. The interlayer film for laminated glass according to claim 5 or 6, wherein a coordinate area RS1 of a*b* of reflected light obtained at incident angles of 5°, 20°, 40°, and 60° in the L*a*b* color system for the first resin layer satisfies 1 ≤ RS1 ≤ 40.

9. The interlayer film for laminated glass according to claim 5 or 6, wherein, in the L*a*b* color system for the first resin layer,
the reflected light at an incident angle of 5° satisfies at least any of -8 ≤ a* ≤ 5 or -6 ≤ b* ≤ 5, and
the reflected light at an incident angle of 60° satisfies at least any of -5 ≤ a* ≤ 5 or -5 ≤ b* ≤ 5.

10. The interlayer film for laminated glass according to any one of claims 1, 2, 5, and 6, further comprising a second resin layer.

11. The interlayer film for laminated glass according to any one of claims 1, 2, 5, and 6, wherein, in an L*a*b* color system for the interlayer film for laminated glass, transmitted light obtained at an incident angle of 5° satisfies at least any of -10 ≤ a* ≤ 5 or 3 ≤ b* ≤ 15 and transmitted light obtained at an incident angle of 60° satisfies at least any of -10 ≤ a* ≤ 10 or 0 ≤ b* ≤ 10.

12. The interlayer film for laminated glass according to any one of claims 1, 2, 5, and 6, wherein, in an L*a*b* color system for the interlayer film for laminated glass, reflected light obtained at an incident angle of 5° satisfies at least any of -10 ≤ a* ≤ 10 or -10 ≤ b* ≤ 3, and reflected light obtained at an incident angle of 60° satisfies at least any of -5 ≤ a* ≤ 5 or -5 ≤ b* ≤ 5.

13. The interlayer film for laminated glass according to any one of claims 1, 2, 5, and 6, wherein the first resin layer comprises a filler (A) comprising at least any of a non-metal material or a metal oxide.

14. The interlayer film for laminated glass according to claim 13, wherein the filler (A) comprises two or more kinds of metal oxides.

15. The interlayer film for laminated glass according to claim 14, wherein the two or more kinds of metal oxides have refractive indexes different from each other.

16. The interlayer film for laminated glass according to claim 13, wherein the filler (A) comprises a metal oxide and glass.

17. The interlayer film for laminated glass according to claim 13, wherein the filler (A) has a flat plate shape.

18. The interlayer film for laminated glass according to claim 13, wherein the filler (A) has a multilayer structure.

19. The interlayer film for laminated glass according to claim 13, wherein an aspect ratio of the filler is 1 or more and 50 or less.

20. Laminated glass comprising a first laminated glass member, a second laminated glass member, and the interlayer film for laminated glass according to any one of claims 1, 2, 5, and 6, wherein
the interlayer film for laminated glass is disposed between the first laminated glass member and the second laminated glass member.
